# EUROPEAN PATENT SPECIFICATION

(11) **EP 2 986 054 B1**
(45) Date of publication and mention of the grant of the patent: **30.05.2018**
(21) Application number: 14783156.4
(22) Date of filing: 04.04.2014
(51) Int. Cl.: H04W 36/00, H04W 36/08

(54) **METHOD AND DEVICE FOR CELL SWITCHING**
VERFAHREN UND VORRICHTUNG ZUR ZELLENVERMITTLUNG
PROCÉDÉ ET DISPOSITIF DE COMMUTATION DE CELLULE

(30) Priority: 07.04.2013 CN 201310118038
(43) Date of publication of application: 17.02.2016
(73) Proprietor: China Academy of Telecommunications Technology, Hai Dian District Beijing 100191 (CN)
(72) Inventor: FU, Zhe, Beijing 100191 (CN); ZHAO, Yali, Beijing 100191 (CN)
(74) Representative: Nony
(86) International application number: PCT/CN2014/074778
(87) International publication number: WO 2014/166358

(56) References cited:
- EP-A1- 2 237 607
- WO-A2-2012/060632
- WO-A2-2013/042979
- CN-A- 101 882 985
- CN-A- 101 932 106
- CN-A- 101 998 553
- CN-A- 102 958 119

## Description

### Field

The present invention relates to the field of communications and particularly to a method and device for cell handover.

### Background

Seven Time Division Duplex (TDD) uplink-downlink (UL/DL) configurations as depicted in Table 1 are defined in total in a Long Term Evolution (LTE) TDD system. In the seven TDD UL/DL configurations, the subframe 0 and the subframe 5, and a Downlink Pilot Slot (DwPTS) in a special subframe in a radio frame are always used for downlink transmission; and the subframe 2, and an Uplink Pilot Slot (UpPTS) in the special subframe in the radio frame are always used for uplink transmission.

**Table 1 LTE TDD UL/DL configurations**

| Configuration No. | Subframe No. | | | | | | | | | |
|---|---|---|---|---|---|---|---|---|---|---|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

Here D represents a downlink subframe, U represents an uplink subframe, and S represents a special subframe.

The TDD UL/DL configuration schemes in the LTE Release 8 (R8) are static or semi-static. The static or semi-static TDD UL/DL configurations are applicable to a scenario of large coverage by a macro cell. However an increasing number of cells covered by low-power base stations including picocells, home NodeBs, etc., have been deployed for small coverage areas along with the advancement of technologies, and there are a small number of User Equipments (UEs) and a significantly varying traffic demand of the UEs in these cells, thus resulting in a dynamically varying proportion of uplink traffic to downlink traffic being needed in the cells. In view of this, the dynamic TDD UL/DL configuration change mechanism has been introduced to the project of Enhancement to LTE TDD for DL-UL Interference Management and Traffic Adaptation (LTE eIMTA) so that the TDD UL/DL configuration change frequency shortens from several days to several milliseconds (ms). If the TDD UL/DL configuration is changed, then the eNB will notify the UE, where the existing notification mechanisms include a broadcast scheme, a dedicated signaling scheme, etc.

Particularly in the broadcast scheme, the change can be notified of via a system message update or similarly to an Earthquake and Tsunami Warning System (ETWS). The TDD UL/DL configuration change periodicity allowable by the system message update is 640 ms, and the TDD UL/DL configuration change periodicity allowable by the ETWS-like notification is 320 ms. Furthermore the broadcast scheme can be categorized into the following three categories:
1. A TDD UL/DL configuration notification Information Element (IE) is introduced to a Master Information Block (MIB), and the User Equipment (UE) is notified of the updated TDD UL/DL configuration in the MIB, so that the UE is forced to fetch the MIB at least once in several ms, which can be the TDD UL/DL configuration update periodicity.
2. The R8 system message update procedure is reused to notify the UE of the updated TDD UL/DL configuration.
3. The R10 ETWS notification procedure is reused, that is, firstly the UE is notified via paging that the TDD UL/DL configuration is changed, and then the UE obtains the updated TDD UL/DL configuration by fetching a System Information Block 1 (SIB1), or a TDD UL/DL configuration indicator newly defined in a new System Information Block (SIB).

Particularly the dedicated signaling scheme can adopt Radio Resource Control (RRC) signaling, Media Access Control (MAC) signaling, or Physical Downlink Control Channel (PDCCH) signaling. The TDD UL/DL configuration change periodicity allowed for RRC signaling is approximately 200 ms; the TDD UL/DL configuration change periodicity allowed for MAC signaling is approximately tens of ms; and the TDD UL/DL configuration change periodicity allowed for PDCCH signaling is approximately 10 ms.

If the UE needs cell handover, then the UE obtains a TDD UL/DL configuration of a destination cell in a cell handover command, and selects according to the configuration a resource to initiate a random access for a random access procedure. In the dynamic TDD UL/DL configuration scenario, the TDD UL/DL configuration of the destination cell may change after a destination eNB sends out a random access response message as the cell handover command (where the message carries the TDD UL/DL configuration of the destination cell), so that the TDD UL/DL configuration of the destination cell, obtained by the UE from the cell handover command will be different from the TDD UL/DL configuration really used by the destination cell, thus resulting in such a failure of the random access procedure that the UE may fail to be handed over to the destination cell. EP2 237 607 A1 discloses a method for cell handover wherein the target cell uses a TDD mode; WO2012/060632 A2 discloses in addition to TDD cell handover that the radio frame has length of 10ms in 10 equally sized subframes; WO2013/042979 A2 discloses DL CC/UL CC link can be fixed or semi-statically configured.

### Summary

An object of the invention is to provide a method and device for cell handover so as to address such a problem that the UE may fail to be handed over to the destination cell since a TDD UL/DL configuration of a destination cell may change after a destination eNB sends out a response message to a cell handover request.

The object of the invention is attained in the following technical solutions:

A first method for cell handover includes:
detecting, by a UE, a broadcast of an access network device upon determining that a destination cell supports a dynamic time division duplex uplink-downlink, TDD UL/DL, configuration according to cell type information of the destination cell, carried in a cell handover command sent by the access network device;
if a broadcast carrying a changed TDD UL/DL configuration of the destination cell is detected by the UE, determining, by the UE, subframes for uplink transmission in a cell handover procedure according to an instruction in the cell handover command sent by an access network device, wherein transmission directions of the subframes for uplink transmission in the cell handover procedure remain constant in the cell handover procedure; and
sending a message for a handover to a destination cell, to the access network device in the determined subframes during the handover to the destination cell.

A second method for cell handover includes:
determining, by an access network device, that a destination cell supports a dynamic time division duplex uplink-downlink configuration;
determining, by the access network device, subframes for uplink transmission in a cell handover procedure of a UE to a destination cell, wherein transmission directions of the subframes for uplink transmission in the cell handover procedure remain constant in the cell handover procedure when a time division duplex uplink-downlink, TDD UL/DL, configuration of the destination cell has changed; and
sending, by the access network device, a cell handover command to the UE, wherein the cell handover command carries cell type information of the destination cell to indicate that the destination cell supports a dynamic TDD UL/DL configuration and information to instruct the UE to determine the subframes for uplink transmission in the cell handover procedure.

A first UE includes:
an uplink transmission subframe determining unit configured to determine subframes for uplink transmission in a cell handover procedure according to an instruction in a cell handover command sent by an access network device, wherein transmission directions of the subframes for uplink transmission in the cell handover procedure remain constant in the cell handover procedure; and
a handover unit configured to send a message for a handover to a destination cell, to the access network device in the determined subframes during the handover to the destination cell.

A first access network device includes:
an uplink transmission subframe determining unit configured to determine subframes for uplink transmission in a cell handover procedure of a UE to a destination cell supporting a dynamic time division duplex uplink-downlink, TDD UL/DL, configuration, wherein transmission directions of the subframes for uplink transmission in the cell handover procedure remain constant in the cell handover procedure when a TDD UL/DL configuration of the destination cell has changed; and
a handover command sending unit configured to send a cell handover command to the UE, wherein the cell handover command carries cell type information of the destination cell to indicate that the destination cell supports the dynamic TDD UL/DL configuration and information to instruct the UE to determine the subframes for uplink transmission in the cell handover procedure.

In the embodiments of the invention, the transmission directions of the subframes for uplink transmission remain constant in the cell handover procedure of the UE to the destination cell, so that the message for the handover to the destination cell, sent by the UE in the subframes for uplink transmission can be received correctly by the access network device during the handover to the destination cell to thereby improve the handover success ratio of the UE to the destination cell.

A third method for cell handover includes:
detecting, by a UE, a broadcast of an access network device upon determining that a destination cell supports a dynamic time division duplex uplink-downlink configuration according to cell type information of the destination cell, carried in a cell handover command sent by the access network device;
if a broadcast carrying a changed time division duplex uplink-downlink configuration of the destination cell is detected by the UE, then determining subframes for uplink transmission in a cell handover procedure according to the changed time division duplex uplink-downlink configuration; and
sending, by the UE, a message for a handover to the destination cell, to the access network device in the determined subframes during the handover to the destination cell.

A fourth method for cell handover includes:
determining, by an access network device, that a destination cell supports a dynamic time division duplex uplink-downlink configuration; and
sending, by the access network device, a cell handover command to a UE, wherein the cell handover command carries cell type information of the destination cell to indicate that the destination cell supports a dynamic time division duplex uplink-downlink configuration.

A second UE includes:
a broadcast detecting unit configured to detect a broadcast of an access network device upon determining that a destination cell supports a dynamic time division duplex uplink-downlink configuration, according to cell type information of the destination cell, carried in a cell handover command sent by the access network device;
an uplink transmission subframe determining unit configured, if a broadcast carrying a changed time division duplex uplink-downlink configuration of the destination cell is detected by the broadcast detecting unit, to determine subframes for uplink transmission in a cell handover procedure according to the changed time division duplex uplink-downlink configuration; and
a handover unit configured to send a message for a handover to the destination cell, to the access network device in the determined subframes during the handover to the destination cell.

A second access network device includes:
a cell type determining unit configured to determine that a destination cell supports a dynamic time division duplex uplink-downlink configuration; and
a handover command sending unit configured to send a cell handover command to a UE, wherein the cell handover command carries cell type information of the destination cell to indicate that the destination cell supports a dynamic time division duplex uplink-downlink configuration.

A third UE includes a processor and a memory, where the memory is configured to store codes of a computer program and the processor is configured to execute the computer program to:
determine subframes for uplink transmission in a cell handover procedure according to an instruction in a cell handover command sent by an access network device, wherein transmission directions of the subframes for uplink transmission in the cell handover procedure remain constant in the cell handover procedure; and
send a message for a handover to a destination cell, to the access network device in the determined subframes during the handover to the destination cell.

A fourth UE includes a processor and a memory, where the memory is configured to store codes of a computer program and the processor is configured to execute the computer program to: detect a broadcast of an access network device upon determining that a destination cell supports a dynamic time division duplex uplink-downlink configuration, according to cell type information of the destination cell, carried in a cell handover command sent by the access network device; if a broadcast carrying a changed time division duplex uplink-downlink configuration of the destination cell is detected by the processor, determine subframes for uplink transmission in a cell handover procedure according to the changed time division duplex uplink-downlink configuration; and send a message for a handover to the destination cell, to the access network device in the determined subframes during the handover to the destination cell.

A third access network device includes a processor and a memory, where the memory is configured to store codes of a computer program and the processor is configured to execute the computer program to:
determine subframes for uplink transmission in a cell handover procedure of a UE to a destination cell, wherein transmission directions of the subframes for uplink transmission in the cell handover procedure remain constant in the cell handover procedure; and
send a cell handover command to the UE, wherein the cell handover command carries information to instruct the UE to determine the subframes for uplink transmission in the cell handover procedure .

A fourth access network device includes a processor and a memory, where the memory is configured to store codes of a computer program and the processor is configured to execute the computer program to:
determine that a destination cell supports a dynamic time division duplex uplink-downlink configuration; and
send a cell handover command to a UE, wherein the cell handover command carries cell type information of the destination cell to indicate that the destination cell supports a dynamic time division duplex uplink-downlink configuration.

In the embodiments of the invention, the access network device sends the cell handover command carrying the cell type information to the UE to indicate that the destination cell supports a dynamic TDD UL/DL configuration. The UE detects a broadcast of the access network device upon determining that the destination cell supports a dynamic TDD UL/DL configuration. If the TDD UL/DL configuration of the destination cell is changed, then the UE can know it in a timely manner, and determine the subframes for uplink transmission according to the changed TDD UL/DL configuration, so that the message for a handover to the destination cell, sent by the UE in the subframes for uplink transmission can be received correctly by the access network device during the handover to the destination cell to thereby improve the handover success ratio of the UE to the destination cell.

### Brief Description of the Drawings

Fig.1 illustrates a flow chart of a first method at the UE side according to an embodiment of the invention;
Fig.2 illustrates a flow chart of a second method at the UE side according to an embodiment of the invention;
Fig.3 illustrates a flow chart of a first method at the access network device side according to an embodiment of the invention;
Fig.4 illustrates a flow chart of a second method at the access network device side according to an embodiment of the invention;
Fig.5 illustrates a diagram of signaling interaction in a contention based random access;
Fig.6 illustrates a diagram of signaling interaction in a non-contention based random access;
Fig.7 illustrates a schematic structural diagram of a first UE according to an embodiment of the invention;
Fig.8 illustrates a schematic structural diagram of a second UE according to an embodiment of the invention;
Fig.9 illustrates a schematic structural diagram of a third UE according to an embodiment of the invention;
Fig.10 illustrates a schematic structural diagram of a fourth UE according to an embodiment of the invention;
Fig.11 illustrates a schematic structural diagram of a first access network device according to an embodiment of the invention;
Fig.12 illustrates a schematic structural diagram of a second access network device according to an embodiment of the invention;
Fig.13 illustrates a schematic structural diagram of a third access network device according to an embodiment of the invention; and
Fig.14 illustrates a schematic structural diagram of a fourth access network device according to an embodiment of the invention.

### Detailed Description of the Embodiments

Embodiments of the invention provide a solution to cell handover. In this solution, an access network device determines subframes for uplink transmission in a cell handover procedure of the UE to a destination cell, where transmission directions of the subframes for uplink transmission in the cell handover procedure remain unchanged in the cell handover procedure; and the access network device sends a cell handover command to the UE, where the cell handover command carries information instructing the UE to determine the subframes for uplink transmission in the cell handover procedure. The UE determines the subframes for uplink transmission in the cell handover procedure according to the instruction in the cell handover command sent by the access network device; and the UE sends a message for cell handover to the destination cell, to the access network device in the determined subframes in the cell handover procedure to the destination cell.

In the embodiments of the invention, the transmission directions of the subframes for uplink transmission remain unchanged in the cell handover procedure of the UE to the destination cell, so that the message for cell handover to the destination cell, sent by the UE in the subframes for uplink transmission can be received correctly by the access network device during the cell handover to the destination cell to thereby improve the handover success ratio of the UE to the destination cell.

The embodiments of the invention further provide another solution to cell handover. In the solution, an access network device determines that a destination cell supports a dynamic TDD UL/DL configuration, and sends a cell handover command to a UE, where the cell handover command carries cell type information of the destination cell to indicate that the destination cell supports a dynamic TDD UL/DL configuration. The UE detects a broadcast of the access network device upon determining that the destination cell supports a dynamic TDD UL/DL configuration, according to the cell type information of the destination cell, carried in the cell handover command sent by the access network device; and if a broadcast carrying a changed TDD UL/DL configuration of the destination cell is detected by the UE, then the UE determines subframes for uplink transmission in a cell handover procedure according to the changed TDD UL/DL configuration; and the UE sends a message for cell handover to the destination cell, to the access network device in the determined subframes in the cell handover to the destination cell.

In the embodiments of the invention, the access network device sends the cell handover command carrying the cell type information to the UE to indicate that the destination cell supports a dynamic TDD UL/DL configuration. The UE detects a broadcast of the access network device upon determining that the destination cell supports a dynamic TDD UL/DL configuration. If the TDD UL/DL configuration of the destination cell is changed, then the UE can know it in a timely manner, and determine the subframes for uplink transmission according to the changed TDD UL/DL configuration, so that the message for a handover to the destination cell, sent by the UE in the subframes for uplink transmission can be received correctly by the access network device during the handover to the destination cell to thereby improve the handover success ratio of the UE to the destination cell.

In the embodiments of the invention, if a source cell and the destination cell are served by the same eNB, then the access network device is the eNB. If the source cell and the destination cell are served by different eNBs, then the access network device includes a source eNB and a destination eNB.

The technical solutions according to the embodiments of the invention will be described below in details with reference to the drawings.

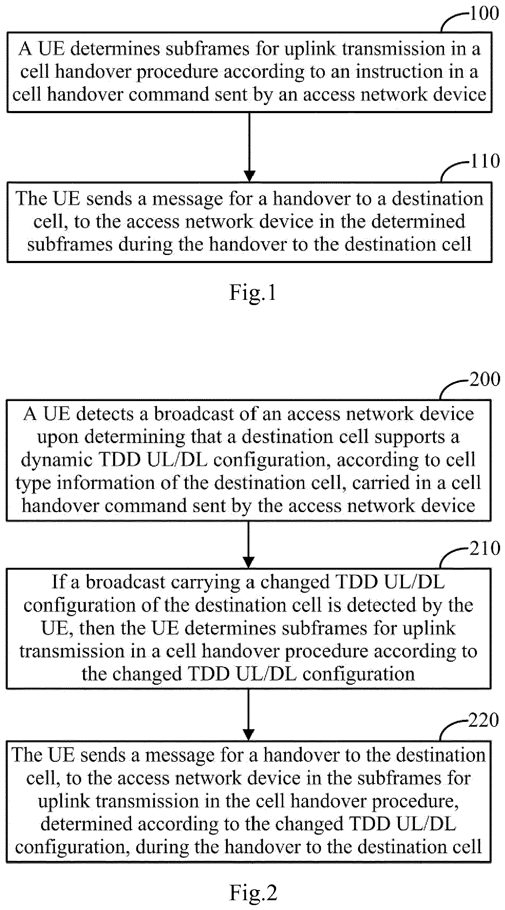

Fig.1 illustrates a flow chart of a method at the UE side of the solution to cell handover according to an embodiment of the invention, where a particular implementation thereof includes:
In the step 100, a UE determines subframes for uplink transmission in a cell handover procedure according to an instruction in a cell handover command sent by an access network device.

In the embodiment of the invention, transmission directions of the subframes for uplink transmission in the cell handover procedure remain unchanged in the cell handover procedure. The subframes for uplink transmission can be uplink subframes or can be UpPTSs in special subframes.

The subframes for which the transmission directions remain unchanged in the cell handover procedure can be subframes with the same transmission direction in a set of TDD UL/DL configurations (which can be but will not be limited to that depicted in Table 1) in a communication system, or can be subframes for which transmission directions do not varying with a varying TDD UL/DL configuration in the cell handover procedure and even a period of time after cell handover is completed.

If a source cell and a destination cell are served by different eNBs, then the cell handover command received by the UE is sent by a source eNB.

In the step 110, the UE sends a message for a handover to a destination cell, to the access network device in the determined subframes during the handover to the destination cell.

If a source cell and the destination cell are served by different eNBs, then the UE sends the message for cell handover to the destination cell to a destination eNB in the cell handover procedure. For example, the UE sends a preamble to the destination eNB as a random access request, sends a cell handover completion message to the destination eNB, etc.

In the embodiment of the invention, the UE can determine the subframes for uplink transmission in the cell handover procedure according to the instruction in the cell handover command sent by the access network device in a number of implementations, several of which will be listed below.

In a first implementation in which the UE determines the subframes for uplink transmission in the cell handover procedure:

The UE obtains Physical Random Access Channel (PRACH) configuration information carried in the cell handover command, determines subframes for transmitting a PRACH according to the PRACH configuration information, and determines the subframes for transmitting a PRACH as the subframes for uplink transmission in the cell handover procedure.

Here the PRACH configuration information can include but will not be limited to a PRACH configuration index (prach-ConfigIndex). The prach-ConfigIndex corresponds to subframes in an LTE system. For example, prach-ConfigIndex ranging from 48 to 53 is transmitted in the subframe 2, and an UpPTS in a special subframe.

In a second implementation in which the UE determines the subframes for uplink transmission in the cell handover procedure:
The UE obtains subframe numbers for uplink transmission, carried in the cell handover command, and determines subframes corresponding to the subframe numbers carried in the cell handover command as the subframes for uplink transmission in the cell handover procedure.

Here the cell handover command carries the subframe numbers for uplink transmission. The cell handover command can also carry subframe numbers, and the UE can determine as prescribed the subframes corresponding to the subframe numbers carried in the cell handover command as the subframe number for uplink transmission in the cell handover procedure.

Further to any one of the embodiments of the method at the UE side in Fig.1, preferably the cell handover command further carries subframe numbers for downlink transmission in the cell handover procedure. Transmission directions of the subframe numbers for downlink transmission in the cell handover procedure remain unchanged in the cell handover procedure. The UE obtains the subframe numbers for downlink transmission in the cell handover procedure, carried in the cell handover command; and the UE detects scheduling information sent by the access network device, in subframes corresponding to the subframe numbers for downlink transmission in the cell handover procedure, during the handover to the destination cell.

In a third implementation in which the UE determines the subframes for uplink transmission in the cell handover procedure:
The UE obtains a TDD UL/DL configuration for the cell handover procedure, carried in the cell handover command, and determines the subframes for uplink transmission in the cell handover procedure according to the TDD UL/DL configuration carried in the cell handover command.

In this implementation, the UE can further determine subframes for downlink transmission in the cell handover procedure according to the TDD UL/DL configuration carried in the cell handover command; and the UE detects scheduling information sent by the access network device in the subframes for downlink transmission during the handover to the destination cell.

In a fourth implementation in which the UE determines the subframes for uplink transmission in the cell handover procedure:
The UE determines subframes for uplink transmission and with unchanged transmission directions as the subframes for uplink transmission in the cell handover procedure upon determining that the destination cell supports a dynamic TDD UL/DL configuration, according to cell type information of the destination cell, carried in the cell handover command, where the cell type information indicates that whether the cell supports a dynamic TDD UL/DL configuration, or the cell type information indicates that the destination cell supports a dynamic TDD UL/DL configuration.

In this fourth implementation, preferably the UE can search pre-configuration information for the subframes for uplink transmission and with unchanged transmission directions. The UE can alternatively obtain the subframes for uplink transmission and with unchanged transmission directions via higher-layer signaling. Particularly the UE can obtain the subframes for uplink transmission and with unchanged transmission directions via the higher-layer signaling before the cell handover procedure, or can obtain the subframes for uplink transmission and with unchanged transmission directions via the higher-layer signaling in the cell handover procedure.

In this fourth implementation, the subframes for uplink transmission and with unchanged transmission directions can be subframes with the same transmission direction in a set of TDD UL/DL configurations (as depicted in Table 1) in the communication system, or can be subframes for uplink transmission and with unchanged transmission directions, which are preconfigured or are indicated in higher-layer signaling (e.g., the subframe 1, the subframe 2, the subframe 6, and the subframe 7 in the set of configurations (0, 1, 2, 6) in Table 1).

Further to any one of the embodiments of the method at the UE side in Fig.1, preferably the UE starts to receive a random access response message sent by the access network device, in a random access response window at a starting instance of time of a random access response in the cell process to the destination cell. In the embodiment o the invention, the length of the random access response window is an integer greater than 10 ms, e.g., 12 ms, 14 ms, 15 ms, 20 ms, etc.

Since the TDD UL/DL configuration is changed, there may be a small number of subframes for downlink transmission, so if the random access response window lengthens, then the success ratio of the random access will be improved.

Fig.2 illustrates a flow chart of another method at the UE side in the solution to cell handover according to an embodiment of the invention, where an implementation thereof includes:

In the step 200, a UE detects a broadcast of an access network device upon determining that a destination cell supports a dynamic TDD UL/DL configuration, according to cell type information of the destination cell, carried in a cell handover command sent by the access network device;
In the step 210, if a broadcast carrying a changed TDD UL/DL configuration of the destination cell is detected by the UE, then the UE determines subframes for uplink transmission in a cell handover procedure according to the changed TDD UL/DL configuration; and
In the step 220, the UE sends a message for a handover to the destination cell, to the access network device in the subframes for uplink transmission in the cell handover procedure, determined according to the changed TDD UL/DL configuration, during the handover to the destination cell.

Here if the UE does not detect the broadcast carrying a changed TDD UL/DL configuration of the destination cell, then the UE sends the message for a handover to the destination cell, to the access network device according to a TDD UL/DL configuration of the destination cell, carried in the cell handover command, during the handover to the destination cell.

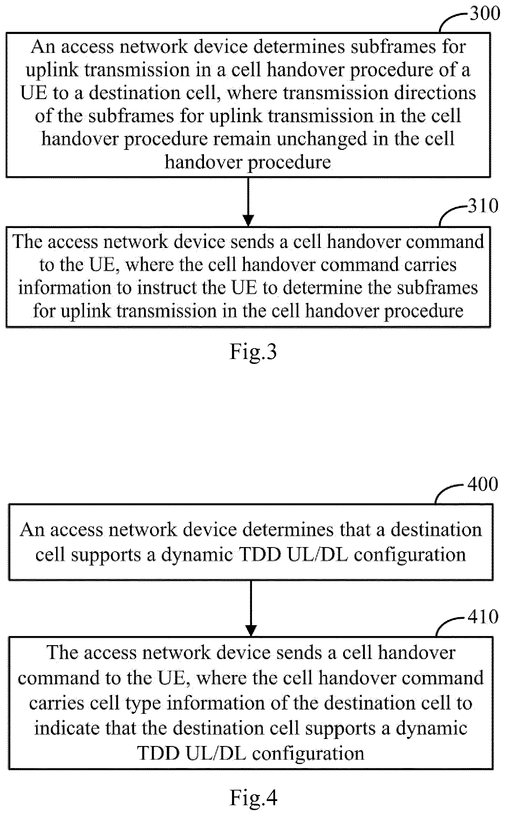

Fig.3 illustrates a flow chart of a method for cell handover at the access network device side according to an embodiment of the invention, where a particular implementation thereof includes:
In the step 300, an access network device determines subframes for uplink transmission in a cell handover procedure of a UE to a destination cell, where transmission directions of the subframes for uplink transmission in the cell handover procedure remain unchanged in the cell handover procedure.

Here the access network device can determine uplink subframes and special subframes (particularly UpPTSs in the special subframes) with the same transmission direction in a set of TDD UL/DL configurations (as depicted in Table 1) in a communication system as the subframes for uplink transmission in the cell handover procedure, or can determine uplink subframes and special subframes with the same transmission direction in a part of the TDD UL/DL configurations in the set of TDD UL/DL configurations (as depicted in Table 1) in the communication system as the subframes for uplink transmission in the cell handover procedure, e.g., the subframe 1, the subframe 2, the subframe 6, and the subframe 7 in the configurations (0, 1, 2, 6).

In the step 310, the access network device sends a cell handover command to the UE, where the cell handover command carries information to instruct the UE to determine the subframes for uplink transmission in the cell handover procedure.

In the embodiment of the invention, there are a number of instances of the information carried in the cell handover command to instruct the UE to determine the subframes for uplink transmission in the cell handover procedure, several of which will be listed below.

First information to instruct the UE to determine the subframes for uplink transmission in the cell handover procedure is PRACH configuration information.

Correspondingly the access network device selects subframes for transmitting a PRACH from subframes for uplink transmission and with unchanged transmission directions, and determines the subframes for transmitting a PRACH as the subframes for uplink transmission in the cell handover procedure. The access network device generates the PRACH configuration information corresponding to the subframes for transmitting a PRACH before the cell handover command is sent to the UE.

Second information to instruct the UE to determine the subframes for uplink transmission in the cell handover procedure is subframe numbers for uplink transmission.

Correspondingly the access network device determines subframes for uplink transmission and with unchanged transmission directions as the subframes for uplink transmission in the cell handover procedure.

Correspondingly the access network device can further receive a message, sent by the UE, for a handover to the destination cell in the subframes for uplink transmission during the handover of the UE to the destination cell.

Third information to instruct the UE to determine the subframes for uplink transmission in the cell handover procedure is a TDD UL/DL configuration in the cell handover procedure.

Correspondingly the access network device can further receive a message, sent by the UE, for a handover to the destination cell in the subframes for uplink transmission during the handover of the UE to the destination cell.

Based upon the third information to instruct the UE to determine the subframes for uplink transmission in the cell handover procedure, the access network device can further determine subframes for downlink transmission in the cell handover procedure according to the TDD UL/DL configuration in the cell handover procedure; and the access network device can send scheduling information to the UE in the subframes for downlink transmission during the handover of the UE to the destination cell.

Further to any one of the embodiments of the method at the access network device side in Fig.3, preferably after a cell handover completion message sent by the UE is received, if a TDD UL/DL configuration of the destination cell is changed in the cell handover procedure, then the access network device sends the changed TDD UL/DL configuration to the UE; and if the TDD UL/DL configuration of the destination cell in the cell handover procedures is not changed, then the access network device sends the TDD UL/DL configuration of the destination cell, or indication information that the TDD UL/DL configuration is not changed to the UE. Alternatively the access network device can further send the TDD UL/DL configuration of the destination cell to the UE upon reception of the cell handover completion message sent by the UE, no matter whether the TDD UL/DL configuration of the destination cell is changed.

Further to any one of the embodiments of the method at the access network device side in Fig.3, preferably the access network device sends a random access response message to the UE in a random access response window at a starting instance of time of a random access response, where the length of the random access response window is an integer greater than 10 ms.

Further to any one of the embodiments of the method at the access network device side in Fig.3, preferably the cell handover command further carries subframe numbers for downlink transmission in the cell handover procedure, and the access network device can further send scheduling information to the UE in subframes corresponding to the subframe numbers for downlink transmission in the cell handover procedure, during the handover of the UE to the destination cell, where transmission directions of the subframes for downlink transmission in the cell handover procedure remain unchanged in the cell handover procedure. Particularly the access network device can determine downlink subframes and special subframes (particularly DwPTS in the special subframes) with the same transmission direction in the set of TDD UL/DL configurations (as depicted in Table 1) in the communication system as the subframes for downlink transmission in the cell handover procedure, or can determine downlink subframes and/or special subframes with the same transmission direction in a part of the TDD UL/DL configurations in the set of TDD UL/DL configurations (as depicted in Table 1) in the communication system as the subframes for downlink transmission in the cell handover procedure, e.g., the subframe 0, the subframe 1, and the subframes 5 to 9 in the configurations (3, 4, 5).

Fig.4 illustrates a flow chart of another method for cell handover at the access network device side according to an embodiment of the invention, where a particular implementation thereof includes:
In the step 400, an access network device determines that a destination cell supports a dynamic TDD UL/DL configuration.
In the step 410, the access network device sends a cell handover command to the UE, where the cell handover command carries cell type information of the destination cell to indicate that the destination cell supports a dynamic TDD UL/DL configuration.

The technical solutions according to the embodiments of the invention will be described below in details by way of an example in which a UE is handed over from a cell of a macro eNB to a small cell of a local eNB in a heterogeneous network. Then the access network device as referred to in the invention includes a macro eNB which is a source eNB, and a local eNB which is a destination eNB.

After the local eNB determines that the UE is allowed to be handed over to the destination cell served by the local eNB, the UE will initiate a random access procedure to the local eNB to be synchronized to the destination cell, where either a contention based random access or a non-contention based random access can be initiated.

Firstly a contention based random access and a non-contention based random access will be described below respectively.

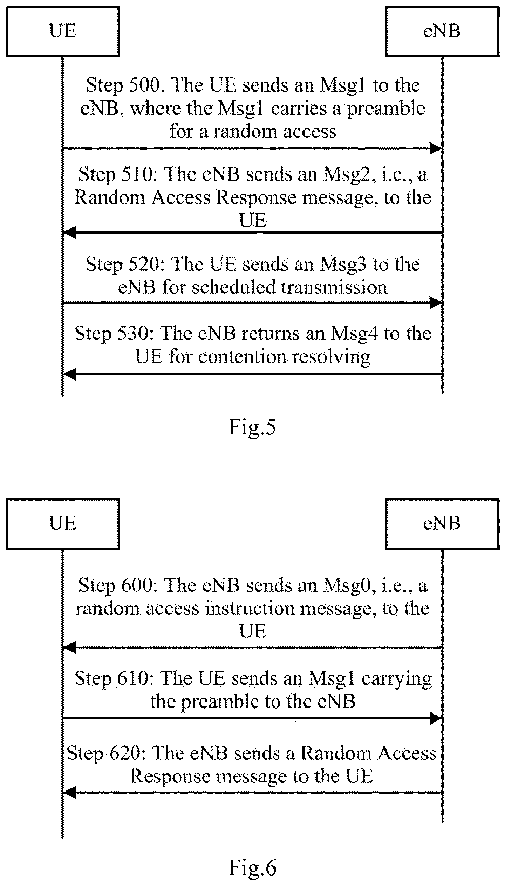

Fig.5 illustrates a contention based random access procedure particularly including the following operations:

In the step 500, the UE sends an Msg1 to the eNB, where the Msg1 carries a preamble for a random access.

Particularly the UE selects the preamble and a PRACH for transmitting the preamble from a set of preambles, and a set of PRACH channel resources for transmitting preambles, allocated by the eNB in advance for the UE, and sends the preamble over the PRACH.

In the step 510, the eNB sends an Msg2, i.e., a Random Access Response (RAR) message, to the UE.

The message is a response of the eNB to the UE upon reception of the Msg1, and the random access response message shall be sent in a random access response window. A starting instance of time of the window is spaced by 2 ms from an ending instance of time of transmission of the preamble, and a particular configured length thereof is specified and notified by the eNB to the UE.

In the step 520, the UE sends an Msg3 to the eNB for scheduled transmission.

The UE transmits the Msg3 over an uplink resource allocated in the Msg2 upon correction reception of the Msg2. The Msg3 can be transmitted in an HARQ procedure.

In the step 530, the eNB returns an Msg4 to the UE for contention resolving.

The Msg4 is configured to resolve potential contention to determine the particular UE to complete the current random access procedure. The UE starts a contention resolving timer when the Msg3 is sent, and restarts the timer each time the Msg3 is retransmitted. The contents of the Msg4 correspond to the contents of the Msg3.

Fig.6 illustrates a non-contention based random access procedure particularly including the following operations:

In the step 600, the eNB sends an Msg0, i.e., a random access instruction message, to the UE.

The contents of the Msg0 include a PRACH resource and a preamble resource over which the UE initiates a non-contention based random access.

In the step 610, the UE sends an Msg1 carrying the preamble to the eNB.

The sent preamble has been allocated and indicated by the eNB, so the UE will not select any set of preambles or preamble. If the eNB does not indicate a set of PRACH channels available, then the UE will select the PRACH channel for transmitting a preamble from the preconfigured set of PRACH channels; and if the eNB indicates a set of PRACH resources in the Msg0, then the UE will select the PRACH channel in the indicated set of PRACH channels, and send the specified preamble over the selected RPACH channel.

In the step 620, the eNB sends a Random Access Response (RAR) message to the UE.

The message is a response of the eNB to the UE upon reception of the Msg1, and the random access response message shall be sent in a random access response window. A starting instance of time of the window is spaced by 2 ms from an ending instance of time of transmission of the preamble, and a particular configured length thereof is specified and notified by the eNB to the UE.

The UE can be handed over to the destination cell served by the local eNB (the destination cell supports a dynamic TDD UL/DL configuration) according to an embodiment of the invention in the application scenario of the heterogeneous network in a particular implementation as follows:

The macro eNB sends a cell handover request message including cell handover preparation information to the local eNB upon determining from a cell handover measurement report that a cell handover procedure of the UE needs to be performed. The cell handover preparation information assists the destination eNB in admission control to configure an RB, a radio resource, etc. The local eNB makes an admission decision according to QoS information of the bearer, a load, interference, etc., upon reception of the cell handover request message, and configures the bearer, the radio resource, etc., according to the cell handover preparation information upon deciding that the UE is allowed to be admitted, and sends a response message to the cell handover request to the macro eNB upon successful configuration.

Here the local eNB configures the bearer by selecting subframes for transmitting a PRACH (i.e., the subframe 2 and the UpPTS in the subframe 1) from the subframes for uplink transmission and with the same transmission direction in Table 1, carrying PRACH configuration information corresponding to the subframes in the response message to the cell handover request, and sending it to the macro eNB, where the PRACH configuration information corresponding to the subframe 2 and the UpPTS in the subframe 1 can be prach-ConfigIndex ranging from 48 to 53.

The local eNB returns the response message to the cell handover request to the macro eNB as the cell handover command to trigger a cell handover of the UE, and the macro eNB sends the received cell handover command to the UE in an RRC connection reconfiguration message carrying the cell handover command, and stops data of the UE from being transmitted and received with the present eNB.

The UE stops data from being transmitted and received with the macro eNB, and initiates a random access procedure to the local NB to be synchronized with the destination cell in the uplink and the downlink, upon reception of the cell handover command sent by the macro eNB. The random access procedure can be the contention based random access illustrated in Fig.5 or can be the non-contention based random access illustrated in Fig.6. In the random access procedure, the UE selects the available PRACH resource according to prach-ConfigIndex in the cell handover command, and sends the preamble over the selected PRACH channel. If the UE sends the preamble in the subframe n, then the UE will start to receive the random access response message sent by the local eNB, in the subframe n+3 in the random access response window (RAR window). Particularly the range of values in the RAR window can be extended to an integer number of milliseconds greater than 10 ms, e.g., 12 ms, 14 ms, 15 ms, 20 ms, etc. The UE decoding the random access response message successfully feeds the cell handover completion message (i.e., the RRC reconfiguration completion message) back to the local eNB only in the subframes configured with a PRACH to notify the local eNB that cell handover has been completed. If the random access procedure is the contention based random access procedure, then the UE will send the Msg3 to the local eNB in the subframes configured with a PRACH.

Optionally after the local eNB receives the cell handover completion message, if the TDD UL/DL configuration of the destination cell is changed in the cell handover procedure of the UE, then the local eNB will notify the UE of the changed TDD UL/DL configuration of the destination cell; otherwise, the local eNB will send the indication information that the TDD UL/DL configuration is not changed in the cell handover procedure, or the TDD UL/DL configuration of the destination cell to the UE. Alternatively the local eNB can send the TDD UL/DL configuration of the destination cell to the UE upon reception of the cell handover completion message sent by the UE.

For example, the destination cell is currently configured with the TDD UL/DL configuration 1, and after the destination eNB replies with the response message to the cell handover request, the TDD UL/DL configuration of the destination cell is changed to the configuration 3, and the subframe 2 and the subframe 1 (special subframes) are subframes for uplink transmission and with transmission directions which do not vary with a varying TDD UL/DL configuration. According to the subframe 1 and the subframe 2, the destination eNB selects the PRACH configuration resources (e.g., prach-ConfigIndex=48) which can be selected by the UE during the handover to the destination cell to be carried in the subframe 1 and the subframe 2, and notifies the UE of the PRACH configuration information. The UE determines the available uplink transmission subframes from prach-ConfigIndex=48, and performs the random access procedure in the determined uplink transmission subframes.

The UE can be handed over to the destination cell served by the local eNB (the destination cell supports a dynamic TDD UL/DL configuration) according to another embodiment of the invention in the application scenario of the heterogeneous network in a particular implementation as follows:

The macro eNB sends a cell handover request message including cell handover preparation information to the local eNB upon determining from a cell handover measurement report that a cell handover procedure of the UE needs to be performed. The cell handover preparation information assists the destination eNB in admission control to configure an RB, a radio resource, etc. The local eNB makes an admission decision according to QoS information of the bearer, a load, interference, etc., upon reception of the cell handover request message, and configures the bearer, the radio resource, etc., according to the cell handover preparation information upon deciding that the UE is allowed to be admitted, and sends a response message to the cell handover request to the macro eNB upon successful configuration.

Here the local eNB configures the bearer by determining the subframes for uplink transmission in the cell handover procedure. Particularly subframes for uplink transmission and with the same transmission direction in the respective configurations in Table 1 can be determined as the subframes for uplink transmission in the cell handover procedure; or subframes for uplink transmission and with the same transmission direction in a part of the configurations in Table 1 can be determined as the subframes for uplink transmission in the cell handover procedure.

Furthermore the local eNB can carry the subframe numbers for uplink transmission in the response message to the cell handover request and send it to the macro eNB, or can select and carry a TDD UL/DL configuration corresponding to the subframes for uplink transmission in the cell handover procedure (which can be a new TDD UL/DL configuration) in the response message to the cell handover request and send it to the macro eNB.

If the subframe numbers for uplink transmission are carried in the response message to the cell handover request and sent to the macro eNB, then optionally subframes for downlink transmission and with the same transmission direction in the respective configurations in Table 1 can be determined as the subframes for downlink transmission in the cell handover procedure; or subframes for downlink transmission and with the same transmission direction in a part of the configurations in Table 1 can be determined as the subframes for downlink transmission in the cell handover procedure. The subframe numbers for downlink transmission in the cell handover procedure can be carried in the response message to the cell handover request and sent to the macro eNB.

It shall be noted that the determined subframes for uplink transmission or downlink transmission in the cell handover procedure may not necessarily be uplink subframes or downlink subframes indicated in the TDD UL/DL configuration currently used by the destination cell. The local eNB performs the random access procedure with the UE in the determined subframes for uplink transmission or downlink transmission in the cell handover procedure, in the cell handover procedure, but still communicates with other UEs in the current TDD UL/DL configuration of the destination cell, in the destination cell.

It shall be noted that the macro eNB can alternatively determine the subframes for uplink transmission or the subframes for downlink transmission in the cell handover procedure, and send the subframe numbers of the determined subframes for uplink transmission or subframes for downlink transmission in the cell handover procedure, or a TDD UL/DL configuration including the subframes for uplink transmission or the subframes for downlink transmission in the cell handover procedure to the UE and the local eNB, and the UE and the local eNB perform the random access procedure in the indicated subframes for uplink transmission or subframes for downlink transmission in the cell handover procedure. Correspondingly in order to enable the macro eNB to know that the destination cell supports a dynamic TDD UL/DL configuration, this can be signaled by the local eNB or can be notified by an OAM.

The local eNB returns the response message to the cell handover request to the macro eNB as the cell handover command to trigger the cell handover of the UE, and the macro eNB sends the received cell handover command to the UE in an RRC connection reconfiguration message carrying the cell handover command, and stops data of the UE from being transmitted and received with the present eNB.

The UE stops data from being transmitted and received with the macro eNB, and initiates a random access procedure to the local NB to be synchronized with the destination cell in the uplink and the downlink, upon reception of the cell handover command sent by the macro eNB. The random access procedure can be the contention based random access illustrated in Fig.5 or can be the non-contention based random access illustrated in Fig.6. In the random access procedure, the UE selects the available PRACH resource in the subframes for uplink transmission, indicated in the cell handover command, and sends the preamble over the selected PRACH channel. If the UE sends the preamble in the subframe n, then the UE will start to receive the random access response message sent by the local eNB, in the subframe n+3 in the random access response window (RAR window). Particularly the range of values in the RAR window can be extended to an integer number of milliseconds greater than 10 ms, e.g., 12 ms, 14 ms, 15 ms, 20 ms, etc. The UE decoding the random access response message successfully feeds the cell handover completion message (i.e., the RRC reconfiguration completion message) back to the local eNB only in the subframes for uplink transmission, indicated in the cell handover command, to notify the local eNB that cell handover has been completed. If the random access procedure is the contention based random access procedure, then the UE will send the Msg3 to the local eNB in the subframes for uplink transmission, indicated in the cell handover command.

Optionally the UE receives a downlink message in the cell handover procedure, e.g., scheduling information sent by the local eNB, in the subframes for downlink transmission, indicated in the cell handover command.

Optionally after the local eNB receives the cell handover completion message, if the TDD UL/DL configuration of the destination cell is changed in the cell handover procedure of the UE, then the local eNB will notify the UE of the changed TDD UL/DL configuration of the destination cell; otherwise, the local eNB will send the indication information that the TDD UL/DL configuration is not changed in the cell handover procedure, or the TDD UL/DL configuration of the destination cell to the UE. Alternatively the local eNB can send the TDD UL/DL configuration of the destination cell to the UE upon reception of the cell handover completion message sent by the UE.

For example, the destination cell is currently configured with the TDD UL/DL configuration 1, and after the destination eNB replies with the response message to the cell handover request, the TDD UL/DL configuration of the destination cell is changed to the configuration 3, and the subframe 2 and the subframe 1 (special subframes) are subframes for uplink transmission and with transmission directions which do not vary with a varying TDD UL/DL configuration. The destination eNB notifies the UE in the response message to the cell handover request that the subframe 1 and the subframe 2 are the subframes for uplink transmission in the cell handover procedure (furthermore the destination eNB can notify the UE that the subframes 0, 1, 5 and 6 can be used for DL transmission so that the UE will detects these subframes for a PDCCH). The UE knows the subframes for uplink transmission/downlink transmission in the cell handover procedure, notified of by the eNB side in the RRC reconfiguration message carrying the cell handover command, and performs uplink transmission in the random access procedure in the subframes 1 and 2 as notified of by the eNB in the cell handover procedure (furthermore the UE can receive PDCCH scheduling only in the subframes 0, 1, 5 and 6).

The UE can be handed over to the destination cell served by the local eNB (the destination cell supports a dynamic TDD UL/DL configuration) according to another embodiment of the invention in the application scenario of the heterogeneous network in a particular implementation as follows:
The macro eNB sends a cell handover request message including cell handover preparation information to the local eNB upon determining from a cell handover measurement report that a cell handover procedure of the UE needs to be performed. The cell handover preparation information assists the destination eNB in admission control to configure an RB, a radio resource, etc. The local eNB makes an admission decision according to QoS information of the bearer, a load, interference, etc., upon reception of the cell handover request message, and configures the bearer, the radio resource, etc., according to the cell handover preparation information upon deciding that the UE is allowed to be admitted, and sends a response message to the cell handover request to the macro eNB upon successful configuration.

Here the local eNB carries cell type information in the response message to the cell handover request to indicate that the destination cell supports a dynamic TDD UL/DL configuration.

The local eNB returns the response message to the cell handover request to the macro eNB as the cell handover command to trigger the handover of the UE, and the macro eNB sends the received cell handover command to the UE in an RRC connection reconfiguration message carrying the cell handover command, and stops data of the UE from being transmitted and received with the present eNB.

The UE stops data from being transmitted and received with the macro eNB, and initiates a random access procedure to the local NB to be synchronized with the destination cell in the uplink and the downlink, upon reception of the cell handover command sent by the macro eNB. The random access procedure can be the contention based random access illustrated in Fig.5 or can be the non-contention based random access illustrated in Fig.6. After the UE knows that the destination cell supports a dynamic TDD UL/DL configuration, in the random access procedure, the UE selects the PRACH resource in the subframes for uplink transmission in the respective configurations in Table 1, and sends the preamble over the selected PRACH channel. If the UE sends the preamble in the subframe n, then the UE will start to receive the random access response message sent by the local eNB, in the subframe n+3 in the random access response window (RAR window). Particularly the range of values in the RAR window can be extended to an integer number of milliseconds greater than 10 ms, e.g., 12 ms, 14 ms, 15 ms, 20 ms, etc. The UE decoding the random access response message successfully feeds the cell handover completion message (i.e., the RRC reconfiguration completion message) back to the local eNB only in the subframes for uplink transmission in the respective configurations in Table 1, to notify the local eNB that cell handover has been completed. If the random access procedure is the contention based random access procedure, then the UE will send the Msg3 to the local eNB in the subframes for uplink transmission in the respective configurations in Table 1.

Correspondingly the local eNB receives a message sent by the UE in the subframes for uplink transmission in the respective configurations in Table 1.

Optionally after the local eNB receives the cell handover completion message, if the TDD UL/DL configuration of the destination cell is changed in the cell handover procedure of the UE, then the local eNB will notify the UE of the changed TDD UL/DL configuration of the destination cell; otherwise, the local eNB will send the indication information that the TDD UL/DL configuration is not changed in the cell handover procedure, or the TDD UL/DL configuration of the destination cell to the UE. Alternatively the local eNB can send the TDD UL/DL configuration of the destination cell to the UE upon reception of the cell handover completion message sent by the UE.

Particularly if the TDD UL/DL configuration change is notified of via system information as specified for a system information change in the Release 8 (R8), then the cell handover command will further carry the TDD UL/DL configuration to be updated (e.g., the configuration 3), and an instance of time when it is updated. The UE operates in the updated TDD UL/DL configuration (e.g., the configuration) at the instance of time when the TDD configuration is updated, as notified of, but operates in the current TDD UL/DL configuration (e.g., the configuration 1) of the destination cell before the instance of time when the configuration is updated arrives.

For example, the destination cell is currently configured with the TDD UL/DL configuration 1, and after the destination eNB replies with the response message to the cell handover request, the TDD UL/DL configuration of the destination cell is changed to the configuration 3, and the subframe 1 and the subframe 2 are subframes for uplink transmission and with unchanged transmission directions. The destination eNB notifies the UE in the response message to the cell handover request that the destination cell of cell handover is the type of cell supporting a dynamic TDD UL/DL configuration. The UE performs uplink transmission of the random access only in the subframe 1 and the subframe 2 upon knowing from the RRC reconfiguration message carrying the cell handover command that the handover destination cell is a cell supporting a dynamic TDD UL/DL configuration.

The UE can be handed over to the destination cell served by the local eNB (the destination cell supports a dynamic TDD UL/DL configuration) according to another embodiment of the invention in the application scenario of the heterogeneous network in a particular implementation as follows:
The macro eNB sends a cell handover request message including cell handover preparation information to the local eNB upon determining from a cell handover measurement report that a cell handover procedure of the UE needs to be performed. The cell handover preparation information assists the destination eNB in admission control to configure an RB, a radio resource, etc. The local eNB makes an admission decision according to QoS information of the bearer, a load, interference, etc., upon reception of the cell handover request message, and configures the bearer, the radio resource, etc., according to the cell handover preparation information upon deciding that the UE is allowed to be admitted, and sends a response message to the cell handover request to the macro eNB upon successful configuration.

Here the local eNB carries cell type information in the response message to the cell handover request to indicate that the destination cell supports a dynamic TDD UL/DL configuration.

The local eNB returns the response message to the cell handover request to the macro eNB as the cell handover command to trigger the cell handover of the UE, and the macro eNB sends the received cell handover command to the UE in an RRC connection reconfiguration message carrying the cell handover command, and stops data of the UE from being transmitted and received with the present eNB.

The UE knows from the cell handover command that the destination cell supports a dynamic TDD UL/DL configuration. In the subsequent cell handover procedure, the UE keeps on detecting a broadcast of the local eNB to obtain the updated TDD configuration of the destination cell. If the UE knows that the TDD UL/DL configuration of the destination cell is changed, by fetching broadcast information of the destination cell in the cell handover procedure, then the UE will perform the cell handover procedure in the updated TDD UL/DL configuration of the destination cell at an instance of time when the TDD configuration change of the destination cell is validated.

For example, the destination cell is currently configured with the TDD UL/DL configuration 1, and after the destination eNB replies with the response message to the cell handover request, the TDD UL/DL configuration of the destination cell is changed to the configuration 3. The destination eNB notifies the UE in the response message to the cell handover request that the destination cell of cell handover is the type of cell supporting a dynamic TDD UL/DL configuration. The UE keeps on detecting a broadcast upon knowing from an RRC reconfiguration message carrying the cell handover command that the destination cell of cell handover is a cell supporting a dynamic TDD UL/DL configuration. If the UE knows that the TDD UL/DL configuration of the destination cell is changed to the configuration 3, by detecting the broadcast, then the UE transmits in the cell handover procedure in the TDD UL/DL configuration 3.

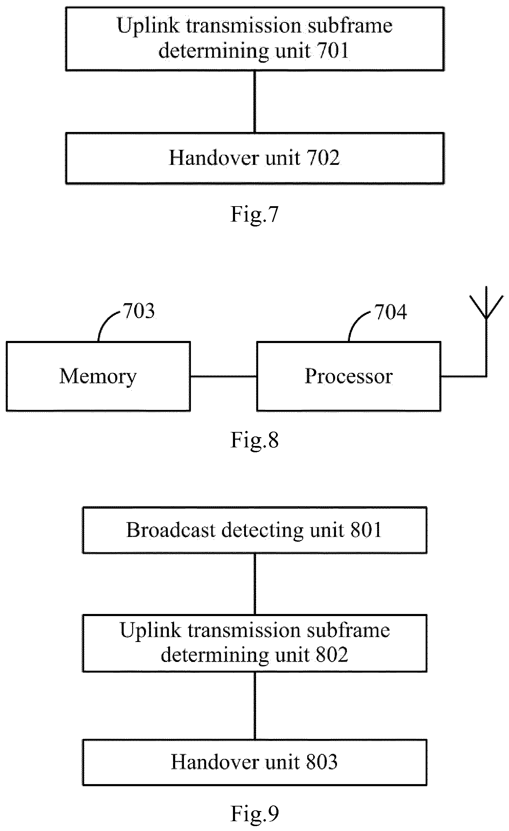

Based upon the same inventive idea as the method, an embodiment of the invention further provides a UE structured as illustrated in Fig.7, which includes:
An uplink transmission subframe determining unit 701 is configured to determine subframes for uplink transmission in a cell handover procedure according to an instruction in a cell handover command sent by an access network device, where transmission directions of the subframes for uplink transmission in the cell handover procedure remain unchanged in the cell handover procedure; and
A handover unit 702 is configured to send a message for a handover to a destination cell, to the access network device in the determined subframes during the handover to the destination cell.

Preferably the uplink transmission subframe determining unit 701 is configured:
To obtain physical random access channel configuration information carried in the cell handover command;
To determine subframes for transmitting a physical random access channel according to the physical random access channel configuration information; and
To determine the subframes for transmitting a physical random access channel as the subframes for uplink transmission in the cell handover procedure.

Preferably the uplink transmission subframe determining unit 701 is configured:
To obtain subframe numbers for uplink transmission, carried in the cell handover command, and to determine subframes corresponding to the subframe numbers carried in the cell handover command as the subframes for uplink transmission in the cell handover procedure.

Preferably the uplink transmission subframe determining unit 701 is configured:
To obtain a time division duplex uplink-downlink configuration for the cell handover procedure, carried in the cell handover command, and to determine the subframes for uplink transmission in the cell handover procedure according to the time division duplex uplink-downlink configuration carried in the cell handover command.

Preferably the handover unit 702 is further configured:
To determine subframes for downlink transmission in the cell handover procedure according to the time division duplex uplink-downlink configuration carried in the cell handover command; and
To detect scheduling information sent by the access network device in the subframes for downlink transmission during the handover to the destination cell.

Preferably the cell handover command further carries subframe numbers for downlink transmission in the cell handover procedure, and the handover unit 702 is further configured:
To obtain subframe numbers for downlink transmission in the cell handover procedure, carried in the cell handover command; and
To detect scheduling information sent by the access network device in subframes corresponding to the subframe numbers for downlink transmission in the cell handover procedure, during the handover to the destination cell.

Preferably the uplink transmission subframe determining unit 701 is configured:
To determine subframes for uplink transmission and with unchanged transmission directions as the subframes for uplink transmission in the cell handover procedure upon determining that the destination cell supports a dynamic time division duplex uplink-downlink configuration, according to cell type information of the destination cell, carried in the cell handover command.

Preferably the uplink transmission subframe determining unit 701 is further configured:
To search pre-configuration information for the subframes for uplink transmission and with unchanged transmission directions; or
To obtain the subframes for uplink transmission and with unchanged transmission directions via higher-layer signaling.

Preferably during the handover to the destination cell, the handover unit 702 is further configured:
To start to receive a random access response message sent by the access network device, in a random access response window at a starting instance of time of a random access response, where the length of the random access response window is an integer greater than 10 ms.

Based upon the same inventive idea as the method, an embodiment of the invention further provides a second UE structured as illustrated in Fig.8, which includes a memory 703 and a processor 704, where:
The processor 704 is configured to execute a computer program, etc., for performing the method above at the UE side to thereby perform the functions at the UE side described in the embodiment of the invention; the memory 703 is configured to store codes of the computer program to configure the processor 704; and the processor 704 can include a baseband processing component, a radio frequency processing component, and other components, as needed, to transmit and receive data. The particular functions of the memory 703 and the processor 704 will be described below.

The processor 704 is configured to determine subframes for uplink transmission in a cell handover procedure according to an instruction in a cell handover command sent by an access network device, where transmission directions of the subframes for uplink transmission in the cell handover procedure remain unchanged in the cell handover procedure; and
The processor 704 is further configured to send a message for a handover to a destination cell, to the access network device in the determined subframes during the handover to the destination cell.

Preferably the processor 704 is configured:
To obtain physical random access channel configuration information carried in the cell handover command;
To determine subframes for transmitting a physical random access channel according to the physical random access channel configuration information; and
To determine the subframes for transmitting a physical random access channel as the subframes for uplink transmission in the cell handover procedure.

Preferably the processor 704 is further configured:
To obtain subframe numbers for uplink transmission, carried in the cell handover command, and to determine subframes corresponding to the subframe numbers carried in the cell handover command as the subframes for uplink transmission in the cell handover procedure.

Preferably the processor 704 is further configured:
To obtain a time division duplex uplink-downlink configuration for the cell handover procedure, carried in the cell handover command, and to determine the subframes for uplink transmission in the cell handover procedure according to the time division duplex uplink-downlink configuration carried in the cell handover command.

Preferably the processor 704 is further configured:
To determine subframes for downlink transmission in the cell handover procedure according to the time division duplex uplink-downlink configuration carried in the cell handover command; and
To detect scheduling information sent by the access network device in the subframes for downlink transmission during the handover to the destination cell.

Preferably the cell handover command further carries subframe numbers for downlink transmission in the cell handover procedure, and the processor 704 is further configured:
To obtain subframe numbers for downlink transmission in the cell handover procedure, carried in the cell handover command; and
To detect scheduling information sent by the access network device in subframes corresponding to the subframe numbers for downlink transmission in the cell handover procedure, during the handover to the destination cell.

Preferably the processor 704 is further configured:
To determine subframes for uplink transmission and with unchanged transmission directions as the subframes for uplink transmission in the cell handover procedure upon determining that the destination cell supports a dynamic time division duplex uplink-downlink configuration, according to cell type information of the destination cell, carried in the cell handover command.

Preferably the processor 704 is further configured:
To search pre-configuration information for the subframes for uplink transmission and with unchanged transmission directions; or
To obtain the subframes for uplink transmission and with unchanged transmission directions via higher-layer signaling.

Preferably during the handover to the destination cell, the processor 704 is further configured:
To start to receive a random access response message sent by the access network device, in a random access response window at a starting instance of time of a random access response, where the length of the random access response window is an integer greater than 10 ms.

Based upon the same inventive idea as the method, an embodiment of the invention further provides a third UE structured as illustrated in Fig.9, which includes:
A broadcast detecting unit 801 is configured to detect a broadcast of an access network device upon determining that a destination cell supports a dynamic time division duplex uplink-downlink configuration, according to cell type information of the destination cell, carried in a cell handover command sent by the access network device;
An uplink transmission subframe determining unit 802 is configured, if the broadcast detecting unit detects a broadcast carrying a changed time division duplex uplink-downlink configuration of the destination cell, to determine subframes for uplink transmission in a cell handover procedure according to the changed time division duplex uplink-downlink configuration; and
A handover unit 803 is configured to send a message for a handover to the destination cell, to the access network device in the determined subframes during the handover to the destination cell.

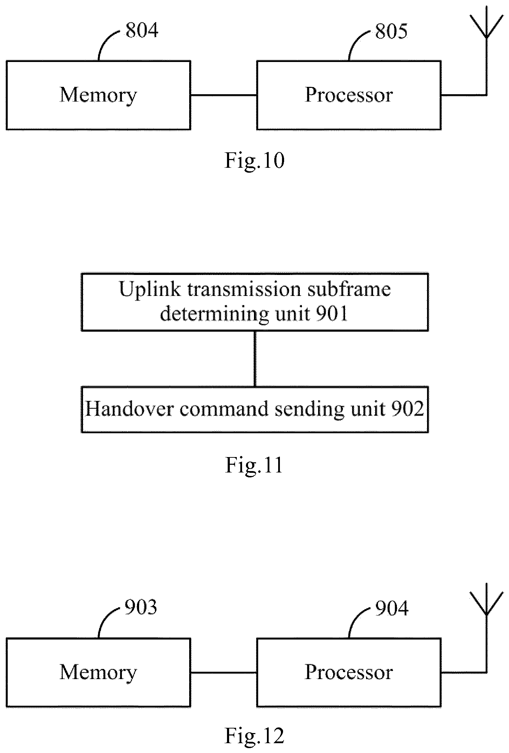

Based upon the same inventive idea as the method, an embodiment of the invention further provides a fourth UE structured as illustrated in Fig.10, which includes a memory 804 and a processor 805, where:
The processor 805 is configured to execute a computer program, etc., for performing the method above at the UE side to thereby perform the functions at the UE side described in the embodiment of the invention; the memory 804 is configured to store codes of the computer program to configure the processor 805; and the processor 805 can include a baseband processing component, a radio frequency processing component, and other components, as needed, to transmit and receive data. The particular functions of the memory 804 and the processor 805 will be described below.
The processor 805 is configured to detect a broadcast of an access network device upon determining that a destination cell supports a dynamic time division duplex uplink-downlink configuration, according to cell type information of the destination cell, carried in a cell handover command sent by the access network device;
The processor 805 is further configured, if a broadcast carrying a changed time division duplex uplink-downlink configuration of the destination cell is detected by the processor 805, to determine subframes for uplink transmission in a cell handover procedure according to the changed time division duplex uplink-downlink configuration; and
A processor 805 is further configured to send a message for a handover to the destination cell, to the access network device in the determined subframes during the handover to the destination cell.

Based upon the same inventive idea as the method, an embodiment of the invention provides an access network device structured as illustrated in Fig.11, which includes:
An uplink transmission subframe determining unit 901 is configured to determine subframes for uplink transmission in a cell handover procedure of a UE to a destination cell, where transmission directions of the subframes for uplink transmission in the cell handover procedure remain unchanged in the cell handover procedure; and
A handover command sending unit 902 is configured to send a cell handover command to the UE, where the cell handover command carries information to instruct the UE to determine the subframes for uplink transmission in the cell handover procedure.

Preferably the uplink transmission subframe determining unit 901 is configured:
To select subframes for transmitting a physical random access channel from subframes for uplink transmission and with unchanged transmission directions, and to determine the subframes for transmitting a physical random access channel as the subframes for uplink transmission in the cell handover procedure; and
Before the cell handover command is sent to the UE, the handover command sending unit 902 is further configured:
   To generate physical random access channel configuration information corresponding to the subframes for transmitting a physical random access channel, where the information carried in the cell handover command to instruct the UE to determine the subframes for uplink transmission in the cell handover procedure is the physical random access channel configuration information.

Preferably the uplink transmission subframe determining unit 901 is configured:
To determine subframes for uplink transmission and with unchanged transmission directions as the subframes for uplink transmission in the cell handover procedure, where the information carried in the cell handover command to instruct the UE to determine the subframes for uplink transmission in the cell handover procedure is subframe numbers for uplink transmission; and
The access network device further includes a handover unit configured:
   To receive a message, sent by the UE, for a handover to the destination cell in the subframes for uplink transmission during the handover of the UE to the destination cell.

Preferably the access network device further includes a handover unit configured:
To send scheduling information to the UE in subframes corresponding to subframe numbers for downlink transmission in the cell handover procedure, during the handover of the UE to the destination cell.

Preferably the information carried in the cell handover command to instruct the UE to determine the subframes for uplink transmission in the cell handover procedure is a time division duplex uplink-downlink configuration in the cell handover procedure; and
Preferably the access network device further includes a handover unit configured:

To receive a message, sent by the UE, for a handover to the destination cell in the subframes for uplink transmission during the handover of the UE to the destination cell.

Preferably the handover unit is further configured:
To determine subframes for downlink transmission in the cell handover procedure according to the time division duplex uplink-downlink configuration in the cell handover procedure; and
To send scheduling information to the UE in the subframes for downlink transmission during the handover of the UE to the destination cell.

Preferably the access network device further includes a configuration sending unit configured:
After a cell handover completion message sent by the UE is received, if a time division duplex uplink-downlink configuration of the destination cell is changed in the cell handover procedure, to send the changed time division duplex uplink-downlink configuration of the destination cell to the UE; and if the time division duplex uplink-downlink configuration of the destination cell is not changed in the cell handover procedure, to send the time division duplex uplink-downlink configuration of the destination cell, or indication information that the time division duplex uplink-downlink configuration is not changed to the UE; or
After a cell handover completion message sent by the UE is received, to send a time division duplex uplink-downlink configuration of the destination cell to the UE.

Preferably the access network device further includes a random access response sending unit configured:
To send a random access response message to the UE in a random access response window at a starting instance of time of a random access response, where the length of the random access response window is an integer greater than 10 ms.

Based upon the same inventive idea as the method, an embodiment of the invention provides a second access network device structured as illustrated in Fig.12, which includes a memory 903 and a processor 904, where:
The processor 904 is configured to execute a computer program, etc., for performing the method above at the access network device to thereby perform the functions at the access network device described in the embodiment of the invention; the memory 903 is configured to store codes of the computer program to configure the processor 904; and the processor 904 can include a baseband processing component, a radio frequency processing component, and other components, as needed, to transmit and receive data. The particular functions of the memory 903 and the processor 904 will be described below.

The processor 904 is configured to determine subframes for uplink transmission in a cell handover procedure of a UE to a destination cell, where transmission directions of the subframes for uplink transmission in the cell handover procedure remain unchanged in the cell handover procedure; and
The processor 904 is further configured to send a cell handover command to the UE, where the cell handover command carries information to instruct the UE to determine the subframes for uplink transmission in the cell handover procedure.

Preferably the processor 904 is configured:
To select subframes for transmitting a physical random access channel from subframes for uplink transmission and with unchanged transmission directions, and to determine the subframes for transmitting a physical random access channel as the subframes for uplink transmission in the cell handover procedure; and
Before the cell handover command is sent to the UE, the processor 904 is further configured:

To generate physical random access channel configuration information corresponding to the subframes for transmitting a physical random access channel, where the information carried in the cell handover command to instruct the UE to determine the subframes for uplink transmission in the cell handover procedure is the physical random access channel configuration information.

Preferably the processor 904 is further configured:
To determine subframes for uplink transmission and with unchanged transmission directions as the subframes for uplink transmission in the cell handover procedure, where the information carried in the cell handover command to instruct the UE to determine the subframes for uplink transmission in the cell handover procedure is subframe numbers for uplink transmission; and
The processor 904 is further configured:

To receive a message, sent by the UE, for a handover to the destination cell in the subframes for uplink transmission during the handover of the UE to the destination cell.

Preferably the processor 904 is further configured:
To send scheduling information to the UE in subframes corresponding to subframe numbers for downlink transmission in the cell handover procedure, during the handover of the UE to the destination cell.

Preferably the information carried in the cell handover command to instruct the UE to determine the subframes for uplink transmission in the cell handover procedure is a time division duplex uplink-downlink configuration in the cell handover procedure; and

The processor 904 is further configured:
To receive a message, sent by the UE, for a handover to the destination cell in the subframes for uplink transmission during the handover of the UE to the destination cell.

Preferably the processor 904 is further configured:
To determine subframes for downlink transmission in the cell handover procedure according to the time division duplex uplink-downlink configuration in the cell handover procedure; and
To send scheduling information to the UE in the subframes for downlink transmission during the handover of the UE to the destination cell.

Preferably the processor 904 is further configured:
After a cell handover completion message sent by the UE is received, if a time division duplex uplink-downlink configuration of the destination cell is changed in the cell handover procedure, to send the changed time division duplex uplink-downlink configuration of the destination cell to the UE; and if the time division duplex uplink-downlink configuration of the destination cell is not changed in the cell handover procedure, to send the time division duplex uplink-downlink configuration of the destination cell, or indication information that the time division duplex uplink-downlink configuration is not changed to the UE; or
After a cell handover completion message sent by the UE is received, to send a time division duplex uplink-downlink configuration of the destination cell to the UE.

Preferably the processor 904 is further configured:
To send a random access response message to the UE in a random access response window at a starting instance of time of a random access response, where the length of the random access response window is an integer greater than 10 ms.

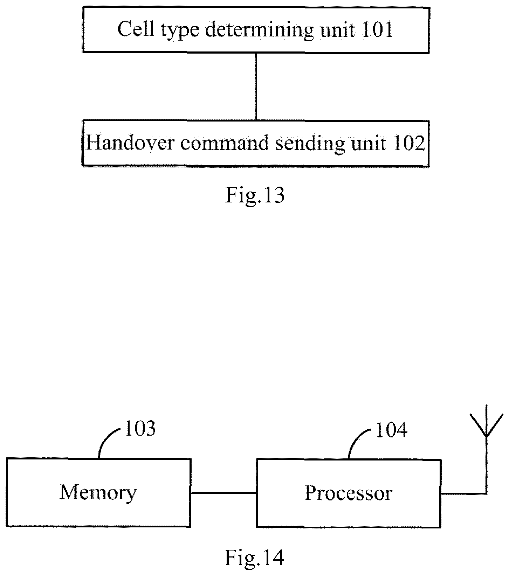

Based upon the same inventive idea as the method, an embodiment of the invention further provides a third access network device structured as illustrated in Fig.13, which includes:
A cell type determining unit 101 is configured to determine that a destination cell supports a dynamic time division duplex uplink-downlink configuration; and
A handover command sending unit 102 is configured to send a cell handover command to a UE, where the cell handover command carries cell type information of the destination cell to indicate that the destination cell supports a dynamic time division duplex uplink-downlink configuration.

Based upon the same inventive idea as the method, an embodiment of the invention further provides a fourth access network device structured as illustrated in Fig.14, which includes a memory 103 and a processor 104, where:
The processor 104 is configured with a computer program, etc., for performing the method above at the access network device to thereby perform the functions at the access network device described in the embodiment of the invention; the memory 103 is configured to store codes of the computer program to configure the processor 104; and the processor 104 can include a baseband processing component, a radio frequency processing component, and other components, as needed, to transmit and receive data. The particular functions of the memory 103 and the processor 104 will be described below.

The processor 104 is configured to determine that a destination cell supports a dynamic time division duplex uplink-downlink configuration; and
The processor 104 is further configured to send a cell handover command to a UE, where the cell handover command carries cell type information of the destination cell to indicate that the destination cell supports a dynamic time division duplex uplink-downlink configuration.

Those skilled in the art shall appreciate that the embodiments of the invention can be embodied as a method, a system or a computer program product. Therefore the invention can be embodied in the form of an all-hardware embodiment, an all-software embodiment or an embodiment of software and hardware in combination. Furthermore the invention can be embodied in the form of a computer program product embodied in one or more computer useable storage mediums (including but not limited to a disk memory, a CD-ROM, an optical memory, etc.) in which computer useable program codes are contained.

The invention has been described in a flow chart and/or a block diagram of the method, the device (system) and the computer program product according to the embodiments of the invention. It shall be appreciated that respective flows and/or blocks in the flow chart and/or the block diagram and combinations of the flows and/or the blocks in the flow chart and/or the block diagram can be embodied in computer program instructions. These computer program instructions can be loaded onto a general-purpose computer, a specific-purpose computer, an embedded processor or a processor of another programmable data processing device to produce a machine so that the instructions executed on the computer or the processor of the other programmable data processing device create means for performing the functions specified in the flow(s) of the flow chart and/or the block(s) of the block diagram.

These computer program instructions can also be stored into a computer readable memory capable of directing the computer or the other programmable data processing device to operate in a specific manner so that the instructions stored in the computer readable memory create an article of manufacture including instruction means which perform the functions specified in the flow(s) of the flow chart and/or the block(s) of the block diagram.

These computer program instructions can also be loaded onto the computer or the other programmable data processing device so that a series of operational steps are performed on the computer or the other programmable data processing device to create a computer implemented process so that the instructions executed on the computer or the other programmable device provide steps for performing the functions specified in the flow(s) of the flow chart and/or the block(s) of the block diagram.

Although the preferred embodiments of the invention have been described, those skilled in the art benefiting from the underlying inventive concept can make additional modifications and variations to these embodiments. Therefore the appended claims are intended to be construed as encompassing the preferred embodiments and all the modifications and variations coming into the scope of the invention.

Evidently those skilled in the art can make various modifications and variations to the invention without departing rom the scope of the invention. Thus the invention is also intended to encompass these modifications and variations thereto so long as the modifications and variations come into the scope of the claims appended to the invention.

## Claims

1. A method for cell handover, **characterized by** comprising:
detecting (200), by a UE, a broadcast of an access network device upon determining that a destination cell supports a dynamic time division duplex uplink-downlink, TDD UL/DL, configuration according to cell type information of the destination cell, carried in a cell handover command sent by the access network device;
if (210) a broadcast carrying a changed TDD UL/DL configuration of the destination cell is detected by the UE, determining, by the UE, subframes for uplink transmission in a cell handover procedure according to an instruction in the cell handover command sent by an access network device, wherein transmission directions of the subframes for uplink transmission in the cell handover procedure remain constant in the cell handover procedure; and
sending (220) a message for a handover to a destination cell, to the access network device in the determined subframes during the handover to the destination cell.

2. The method according to claim 1, wherein determining, by the UE, the subframes for uplink transmission in the cell handover procedure according to the instruction in the cell handover command sent by the access network device comprises:
obtaining, by the UE, physical random access channel configuration information carried in the cell handover command; determining, by the UE, subframes for transmitting a physical random access channel according to the physical random access channel configuration information; and determining, by the UE, the subframes for transmitting a physical random access channel as the subframes for uplink transmission in the cell handover procedure;
obtaining, by the UE, subframe numbers for uplink transmission, carried in the cell handover command, and determining subframes corresponding to the subframe numbers carried in the cell handover command as the subframes for uplink transmission in the cell handover procedure;
obtaining, by the UE, a time division duplex uplink-downlink configuration for the cell handover procedure, carried in the cell handover command, and determining the subframes for uplink transmission in the cell handover procedure according to the time division duplex uplink-downlink configuration carried in the cell handover command;
determining, by the UE, subframes for uplink transmission and with unchanged transmission directions as the subframes for uplink transmission in the cell handover procedure upon determining that the destination cell supports a dynamic time division duplex uplink-downlink configuration, according to cell type information of the destination cell, carried in the cell handover command.

3. The method according to claim 1, wherein when determining, by the UE, the subframes for uplink transmission in the cell handover procedure according to the instruction in the cell handover command sent by the access network device comprises: obtaining, by the UE, a time division duplex uplink-downlink configuration for the cell handover procedure, carried in the cell handover command, and determining the subframes for uplink transmission in the cell handover procedure according to the time division duplex uplink-downlink configuration carried in the cell handover command, the method further comprises:
determining, by the UE, subframes for downlink transmission in the cell handover procedure according to the time division duplex uplink-downlink configuration carried in the cell handover command; and
detecting, by the UE, scheduling information sent by the access network device in the subframes for downlink transmission during the handover to the destination cell.

4. The method according to any one of claims 1 to 2, wherein the cell handover command further carries subframe numbers for downlink transmission in the cell handover procedure, and the method further comprises:
obtaining, by the UE, subframe numbers for downlink transmission in the cell handover procedure, carried in the cell handover command; and
detecting, by the UE, scheduling information sent by the access network device in subframes corresponding to the subframe numbers for downlink transmission in the cell handover procedure, during the handover to the destination cell.

5. The method according to claim 1, wherein when determining, by the UE, the subframes for uplink transmission in the cell handover procedure according to the instruction in the cell handover command sent by the access network device comprises: determining, by the UE, subframes for uplink transmission and with unchanged transmission directions as the subframes for uplink transmission in the cell handover procedure upon determining that the destination cell supports a dynamic time division duplex uplink-downlink configuration, according to cell type information of the destination cell, carried in the cell handover command, the method further comprises:
searching, by the UE, pre-configuration information for the subframes for uplink transmission and with unchanged transmission directions; or
obtaining, by the UE, the subframes for uplink transmission and with unchanged transmission directions via higher-layer signaling.

6. A method for cell handover, **characterized by** comprising:
determining (400), by an access network device, that a destination cell supports a dynamic time division duplex uplink-downlink configuration;
determining (300), by the access network device, subframes for uplink transmission in a cell handover procedure of a UE to a destination cell, wherein transmission directions of the subframes for uplink transmission in the cell handover procedure remain constant in the cell handover procedure when a time division duplex uplink-downlink, TDD UL/DL, configuration of the destination cell has changed; and
sending (410), by the access network device, a cell handover command to the UE, wherein the cell handover command carries cell type information of the destination cell to indicate that the destination cell supports a dynamic TDD UL/DL configuration and information to instruct the UE to determine the subframes for uplink transmission in the cell handover procedure.

7. The method according to claim 6, wherein determining, by the access network device, the subframes for uplink transmission in the cell handover procedure of the UE to the destination cell comprises:
selecting, by the access network device, subframes for transmitting a physical random access channel from subframes for uplink transmission and with unchanged transmission directions, and determining the subframes for transmitting a physical random access channel as the subframes for uplink transmission in the cell handover procedure; and before the access network device sends the cell handover command to the UE, the method further comprises: generating, by the access network device, physical random access channel configuration information corresponding to the subframes for transmitting a physical random access channel, wherein the information carried in the cell handover command to instruct the UE to determine the subframes for uplink transmission in the cell handover procedure is the physical random access channel configuration information.

8. The method according to claim 6, wherein determining, by the access network device, the subframes for uplink transmission in the cell handover procedure of the UE to the destination cell comprises:
determining, by the access network device, subframes for uplink transmission and with unchanged transmission directions as the subframes for uplink transmission in the cell handover procedure, wherein the information carried in the cell handover command to instruct the UE to determine the subframes for uplink transmission in the cell handover procedure is subframe numbers for uplink transmission; and
the method further comprises:
receiving, by the access network device, a message, sent by the UE, for a handover to the destination cell in the subframes for uplink transmission during the handover of the UE to the destination cell.

9. The method according to any one of claims 6 to 8, wherein the cell handover command further carries subframe numbers for downlink transmission in the cell handover procedure, and the method further comprises:
sending, by the access network device, scheduling information to the UE in subframes corresponding to the subframe numbers for downlink transmission in the cell handover procedure, during the handover of the UE to the destination cell.

10. The method according to claim 6, wherein the information carried in the cell handover command to instruct the UE to determine the subframes for uplink transmission in the cell handover procedure is a time division duplex uplink-downlink configuration in the cell handover procedure; and
the method further comprises:
receiving, by the access network device, a message, sent by the UE, for a handover to the destination cell in the subframes for uplink transmission, determined according to the time division duplex uplink-downlink configuration in the cell handover procedure, during the handover of the UE to the destination cell.

11. The method according to claim 10, wherein the method further comprises:
determining, by the access network device, subframes for downlink transmission in the cell handover procedure according to the time division duplex uplink-downlink configuration in the cell handover procedure; and
sending, by the access network device, scheduling information to the UE in the subframes for downlink transmission during the handover of the UE to the destination cell.

12. The method according to any one of claims 6 to 8, 10 and 11, wherein the method further comprises:
after a cell handover completion message sent by the UE is received, if a time division duplex uplink-downlink configuration of the destination cell is changed in the cell handover procedure, then sending, by the access network device, the changed time division duplex uplink-downlink configuration of the destination cell to the UE; and if the time division duplex uplink-downlink configuration of the destination cell is not changed in the cell handover procedure, then sending, by the access network device, the time division duplex uplink-downlink configuration of the destination cell, or indication information that the time division duplex uplink-downlink configuration is not changed to the UE; or
after a cell handover completion message sent by the UE is received, sending, by the access network device, a time division duplex uplink-downlink configuration of the destination cell to the UE.

13. An access network device, **characterized by** comprising:
an uplink transmission subframe determining unit (701) configured to determine subframes for uplink transmission in a cell handover procedure of a UE to a destination cell supporting a dynamic time division duplex uplink-downlink, TDD UL/DL, configuration, wherein transmission directions of the subframes for uplink transmission in the cell handover procedure remain constant in the cell handover procedure when a TDD UL/DL configuration of the destination cell has changed; and
a handover command sending unit (702) configured to send a cell handover command to the UE, wherein the cell handover command carries cell type information of the destination cell to indicate that the destination cell supports the dynamic TDD UL/DL configuration and information to instruct the UE to determine the subframes for uplink transmission in the cell handover procedure.

14. The access network device according to claim 13, wherein the uplink transmission subframe determining unit is configured:
to select subframes for transmitting a physical random access channel from subframes for uplink transmission and with unchanged transmission directions, and to determine the subframes for transmitting a physical random access channel as the subframes for uplink transmission in the cell handover procedure; and
before the cell handover command is sent to the UE, the handover command sending unit is further configured:
to generate physical random access channel configuration information corresponding to the subframes for transmitting a physical random access channel, wherein the information carried in the cell handover command to instruct the UE to determine the subframes for uplink transmission in the cell handover procedure is the physical random access channel configuration information.

15. The access network device according to claim 13, wherein the uplink transmission subframe determining unit is configured:
to determine subframes for uplink transmission and with unchanged transmission directions as the subframes for uplink transmission in the cell handover procedure, wherein the information carried in the cell handover command to instruct the UE to determine the subframes for uplink transmission in the cell handover procedure is subframe numbers for uplink transmission; and
the access network device further comprises a handover unit configured:
to receive a message, sent by the UE, for a handover to the destination cell in the subframes for uplink transmission during the handover of the UE to the destination cell.

16. The access network device according to claim 13, wherein the information carried in the cell handover command to instruct the UE to determine the subframes for uplink transmission in the cell handover procedure is a time division duplex uplink-downlink configuration in the cell handover procedure; and
the access network device further comprises a handover unit configured:
to receive a message, sent by the UE, for a handover to the destination cell in the subframes for uplink transmission, determined according to the time division duplex uplink-downlink configuration in the cell handover procedure, during the handover of the UE to the destination cell.

## Patentansprüche

1. Verfahren für eine Zellenübergabe, **dadurch gekennzeichnet, dass** es Folgendes umfasst:
Detektieren (200), durch ein UE, einer Rundsendung einer Zugangsnetzeinrichtung bei einer Bestimmung, dass eine Zielzelle eine dynamische Zeitduplex-Aufwärtsstrecken-Abwärtsstrecken-Konfiguration bzw. TDD-UL/DL-Konfiguration gemäß Zellentypinformationen der Zielzelle, die in einem durch die Zugangsnetzeinrichtung gesendeten Zellenübergabebefehl geführt wird, unterstützt; falls (210) eine Rundsendung, die eine geänderte TDD-UL/DL-Konfiguration der Zielzelle führt, durch das UE detektiert wird, Bestimmen, durch das UE, von Subrahmen für eine Aufwärtsstreckenübertragung in einer Zellenübergabeprozedur gemäß einer Anweisung im Zellenübergabebefehl, der durch eine Zugangsnetzeinrichtung gesendet wird, wobei Übertragungsrichtungen der Subrahmen für die Aufwärtsstreckenübertragung in der Zellenübergabeprozedur in der Zellenübergabeprozedur konstant bleiben; und
Senden (220) einer Nachricht für eine Übergabe zu einer Zielzelle zu der Zugangsnetzeinrichtung in den bestimmten Subrahmen während der Übergabe zur Zielzelle.

2. Verfahren nach Anspruch 1, wobei das Bestimmen, durch das UE, der Subrahmen für die Aufwärtsstreckenübertragung in der Zellenübergabeprozedur gemäß der Anweisung im Zellenübergabebefehl, der durch die Zugangsnetzeinrichtung gesendet wird, Folgendes umfasst:
Erhalten, durch das UE, von Konfigurationsinformationen eines physischen Direktzugriffskanals, die im Zellenübergabebefehl geführt werden; Bestimmen, durch das UE, von Subrahmen zum Übertragen eines physischen Direktzugriffskanals gemäß den Konfigurationsinformationen des physischen Direktzugriffskanals; und Bestimmen, durch das UE, der Subrahmen zum Übertragen eines physischen Direktzugriffskanals als die Subrahmen für die Aufwärtsstreckenübertragung in der Zellenübergabeprozedur;
Erhalten, durch das UE, von Subrahmennummern für die Aufwärtsstreckenübertragung, die im Zellenübergabebefehl geführt werden, und Bestimmen von Subrahmen, die den im Zellenübergabebefehl geführten Subrahmennummern entsprechen, als die Subrahmen für die Aufwärtsstreckenübertragung in der Zellenübergabeprozedur;
Erhalten, durch das UE, einer Zeitduplex-Aufwärtsstrecken-Abwärtsstrecken-Konfiguration für die Zellenübergabeprozedur, die im Zellenübergabebefehl geführt wird, und Bestimmen der Subrahmen für die Aufwärtsstreckenübertragung in der Zellenübergabeprozedur gemäß der Zeitduplex-Aufwärtsstrecken-Abwärtsstrecken-Konfiguration, die im Zellenübergabebefehl geführt wird;
Bestimmen, durch das UE, von Subrahmen für die Aufwärtsstreckenübertragung und mit ungeänderten Übertragungsrichtungen als die Subrahmen für die Aufwärtsstreckenübertragung in der Zellenübergabeprozedur beim Bestimmen, dass die Zielzelle eine dynamische Zeitduplex-Aufwärtsstrecken-Abwärtsstrecken-Konfiguration unterstützt, gemäß Zellentypinformationen der Zielzelle, die im Zellenübergabebefehl geführt werden.

3. Verfahren nach Anspruch 1, wobei das Verfahren, wenn das Bestimmen, durch das UE, der Subrahmen für die Aufwärtsstreckenübertragung in der Zellenübergabeprozedur gemäß der Anweisung im durch die Zugangsnetzeinrichtung gesendeten Zellenübergabebefehl Folgendes umfasst: Erhalten, durch das UE, einer Zeitduplex-Aufwärtsstrecken-Abwärtsstrecken-Konfiguration für die Zellenübergabeprozedur, die im Zellenübergabebefehl geführt wird, und Bestimmen der Subrahmen für die Aufwärtsstreckenübertragung in der Zellenübergabeprozedur gemäß der Zeitduplex-Aufwärtsstrecken-Abwärtsstrecken-Konfiguration, die im Zellenübergabebefehl geführt wird, ferner Folgendes umfasst:
Bestimmen, durch das UE, von Subrahmen für eine Abwärtsstreckenübertragung in der Zellenübergabeprozedur gemäß der Zeitduplex-Aufwärtsstrecken-Abwärtsstrecken-Konfiguration,
die im Zellenübergabebefehl geführt wird; und
Detektieren, durch das UE, von Scheduling-Informationen, die durch die Zugangsnetzeinrichtung gesendet werden, in den Subrahmen für die Abwärtsstreckenübertragung während der Übergabe zur Zielzelle.

4. Verfahren nach einem der Ansprüche 1 bis 2, wobei der Zellenübergabebefehl ferner Subrahmennummern für die Abwärtsstreckenübertragung in der Zellenübergabeprozedur führt und das Verfahren ferner Folgendes umfasst:
Erhalten, durch das UE, von Subrahmennummern für die Abwärtsstreckenübertragung in der Zellenübergabeprozedur, die im Zellenübergabebefehl geführt werden; und
Detektieren, durch das UE, von Scheduling-Informationen, die durch die Zugangsnetzeinrichtung gesendet werden, in Subrahmen, die den Subrahmennummern für die Abwärtsstreckenübertragung in der Zellenübergabeprozedur entsprechen, während der Übergabe zur Zielzelle.

5. Verfahren nach Anspruch 1, wobei das Verfahren, wenn das Bestimmen, durch das UE, der Subrahmen für die Aufwärtsstreckenübertragung in der Zellenübergabeprozedur gemäß der Anweisung im Zellenübergabebefehl, der durch die Zugangsnetzeinrichtung gesendet wird, Folgendes umfasst: Bestimmen, durch das UE, von Subrahmen für die Aufwärtsstreckenübertragung und mit ungeänderten Übertragungsrichtungen als die Subrahmen für die Aufwärtsstreckenübertragung in der Zellenübergabeprozedur beim Bestimmen, dass die Zielzelle eine dynamische Zeitduplex-Aufwärtsstrecken-Abwärtsstrecken-Konfiguration unterstützt, gemäß Zellentypinformationen der Zielzelle, die im Zellenübergabebefehl geführt werden, ferner Folgendes umfasst:
Durchsuchen, durch das UE, von Vorkonfigurationsinformationen für die Subrahmen für die Aufwärtsstreckenübertragung und mit ungeänderten Übertragungsrichtungen; oder
Erhalten, durch das UE, der Subrahmen für die Aufwärtsstreckenübertragung und mit ungeänderten Übertragungsrichtungen über eine Signalisierung höherer Schicht.

6. Verfahren für eine Zellenübergabe, **dadurch gekennzeichnet, dass** es Folgendes umfasst:
Bestimmen (400), durch eine Zugangsnetzeinrichtung, dass eine Zielzelle eine dynamische Zeitduplex-Aufwärtsstrecken-Abwärtsstrecken-Konfiguration unterstützt;
Bestimmen (300), durch die Zugangsnetzeinrichtung, von Subrahmen für eine Aufwärtsstreckenübertragung in einer Zellenübergabeprozedur eines UE zu einer Zielzelle, wobei Übertragungsrichtungen der Subrahmen für die Aufwärtsstreckenübertragung in der Zellenübergabeprozedur in der Zellenübergabeprozedur konstant bleiben, wenn sich eine Zeitduplex-Aufwärtsstrecken-Abwärtsstrecken-Konfiguration bzw. TDD-UL/DL-Konfiguration der Zielzelle geändert hat; und
Senden (410), durch die Zugangsnetzeinrichtung, eines Zellenübergabebefehls zum UE, wobei der Zellenübergabebefehl Zellentypinformationen der Zielzelle, um anzugeben, dass die Zielzelle eine dynamische TDD-UL/DL-Konfiguration unterstützt, und Informationen, um das UE anzuweisen, die Subrahmen für die Aufwärtsstreckenübertragung in der Zellenübergabeprozedur zu bestimmen, führt.

7. Verfahren nach Anspruch 6, wobei das Bestimmen, durch die Zugangsnetzeinrichtung, der Subrahmen für die Aufwärtsstreckenübertragung in der Zellenübergabeprozedur des UE zur Zielzelle Folgendes umfasst:
Auswählen, durch die Zugangsnetzeinrichtung, von Subrahmen zum Übertragen eines physischen Direktzugriffskanals aus Subrahmen für eine Aufwärtsstreckenübertragung und mit ungeänderten Übertragungsrichtungen und Bestimmen der Subrahmen zum Übertragen eines physischen Direktzugriffskanals als die Subrahmen für die Aufwärtsstreckenübertragung in der Zellenübergabeprozedur; und das Verfahren, bevor die Zugangsnetzeinrichtung den Zellenübergabebefehl zum UE sendet, ferner Folgendes umfasst: Erzeugen, durch die Zugangsnetzeinrichtung, von Konfigurationsinformationen des physischen Direktzugriffskanals, die den Subrahmen zum Übertragen eines physischen Direktzugriffskanals entsprechen, wobei die Informationen, die im Zellenübergabebefehl geführt werden, um das UE anzuweisen, die Subrahmen für die Aufwärtsstreckenübertragung in der Zellenübergabeprozedur zu bestimmen, die Konfigurationsinformationen des physischen Direktzugriffskanals sind.

8. Verfahren nach Anspruch 6, wobei das Bestimmen, durch die Zugangsnetzeinrichtung, der Subrahmen für die Aufwärtsstreckenübertragung in der Zellenübergabeprozedur des UE zur Zielzelle Folgendes umfasst:
Bestimmen, durch die Zugangsnetzeinrichtung, von Subrahmen für die Aufwärtsstreckenübertragung und mit ungeänderten Übertragungsrichtungen als die Subrahmen für die Aufwärtsstreckenübertragung in der Zellenübergabeprozedur, wobei die Informationen, die im Zellenübergabebefehl geführt werden, um das UE anzuweisen, die Subrahmen für die Aufwärtsstreckenübertragung in der Zellenübergabeprozedur zu bestimmen, Subrahmennummern für die Aufwärtsstreckenübertragung sind; und
das Verfahren ferner Folgendes umfasst:
Empfangen, durch die Zugangsnetzeinrichtung, einer Nachricht, die durch das UE gesendet wird, für eine Übergabe zur Zielzelle in den Subrahmen für die Aufwärtsstreckenübertragung während der Übergabe des UE zur Zielzelle.

9. Verfahren nach einem der Ansprüche 6 bis 8, wobei der Zellenübergabebefehl ferner Subrahmennummern für eine Abwärtsstreckenübertragung in der Zellenübergabeprozedur führt und das Verfahren ferner Folgendes umfasst:
Senden, durch die Zugangsnetzeinrichtung, von Scheduling-Informationen zum UE in Subrahmen, die den Subrahmennummern für die Abwärtsstreckenübertragung in der Zellenübergabeprozedur entsprechen, während der Übergabe des UE zur Zielzelle.

10. Verfahren nach Anspruch 6, wobei die Informationen, die im Zellenübergabebefehl geführt werden, um das UE anzuweisen, die Subrahmen für die Aufwärtsstreckenübertragung in der Zellenübergabeprozedur zu bestimmen, eine Zeitduplex-Aufwärtsstrecken-Abwärtsstrecken-Konfiguration in der Zellenübergabeprozedur sind; und
das Verfahren ferner Folgendes umfasst:
Empfangen, durch die Zugangsnetzeinrichtung, einer Nachricht, die durch das UE gesendet wird, für eine Übergabe zur Zielzelle in den Subrahmen für die Aufwärtsstreckenübertragung, die gemäß der Zeitduplex-Aufwärtsstrecken-Abwärtsstrecken-Konfiguration in der Zellenübergabeprozedur bestimmt werden, während der Übergabe des UE zur Zielzelle.

11. Verfahren nach Anspruch 10, wobei das Verfahren ferner Folgendes umfasst:
Bestimmen, durch die Zugangsnetzeinrichtung, von Subrahmen für eine Abwärtsstreckenübertragung in der Zellenübergabeprozedur gemäß der Zeitduplex-Aufwärtsstrecken-Abwärtsstrecken-Konfiguration in der Zellenübergabeprozedur; und
Senden, durch die Zugangsnetzeinrichtung, von Scheduling-Informationen zum UE in den Subrahmen für die Abwärtsstreckenübertragung während der Übergabe des UE zur Zielzelle.

12. Verfahren nach einem der Ansprüche 6 bis 8, 10 und 11, wobei das Verfahren ferner Folgendes umfasst:
nachdem eine Zellenübergabebeendigungsnachricht, die durch das UE gesendet wird, empfangen wird, falls eine Zeitduplex-Aufwärtsstrecken-Abwärtsstrecken-Konfiguration der Zielzelle in der Zellenübergabeprozedur geändert wird, dann Senden, durch die Zugangsnetzeinrichtung, der geänderten Zeitduplex-Aufwärtsstrecken-Abwärtsstrecken-Konfiguration der Zielzelle zum UE; und, falls die Zeitduplex-Aufwärtsstrecken-Abwärtsstrecken-Konfiguration der Zielzelle nicht in der Zellenübergabeprozedur geändert wird, dann Senden, durch die Zugangsnetzeinrichtung, der Zeitduplex-Aufwärtsstrecken-Abwärtsstrecken-Konfiguration der Zielzelle oder von Indikationsinformationen, dass die Zeitduplex-Aufwärtsstrecken-Abwärtsstrecken-Konfiguration nicht geändert wird, zum UE; oder,
nachdem eine Zellenübergabebeendigungsnachricht, die durch das UE gesendet wird, empfangen wird, Senden, durch die Zugangsnetzeinrichtung, einer Zeitduplex-Aufwärtsstrecken-Abwärtsstrecken-Konfiguration der Zielzelle zum UE.

13. Zugangsnetzeinrichtung, **dadurch gekennzeichnet, dass** sie Folgendes umfasst:
eine Aufwärtsstreckenübertragung-Subrahmenbestimmungseinheit (701), die konfiguriert ist zum Bestimmen von Subrahmen für eine Aufwärtsstreckenübertragung in einer Zellenübergabeprozedur eines UE zu einer Zielzelle, die eine dynamische Zeitduplex-Aufwärtsstrecken-Abwärtsstrecken-Konfiguration bzw. TDD-UL/DL-Konfiguration unterstützt, wobei Übertragungsrichtungen der Subrahmen für die Aufwärtsstreckenübertragung in der Zellenübergabeprozedur in der Zellenübergabeprozedur konstant bleiben, wenn sich eine TDD-UL/DL-Konfiguration der Zielzelle geändert hat; und
eine Übergabebefehl-Sendeeinheit (702), die konfiguriert ist zum Senden eines Zellenübergabebefehls zum UE, wobei der Zellenübergabebefehl Zellentypinformationen der Zielzelle, um anzugeben, dass die Zielzelle die dynamische TDD-UL/DL-Konfiguration unterstützt, und Informationen, um das UE anzuweisen, die Subrahmen für die Aufwärtsstreckenübertragung in der Zellenübergabeprozedur zu bestimmen, führt.

14. Zugangsnetzeinrichtung nach Anspruch 13, wobei die Aufwärtsstreckenübertragung-Subrahmenbestimmungseinheit zu Folgendem konfiguriert ist:
Auswählen von Subrahmen zum Übertragen eines physischen Direktzugriffskanals aus Subrahmen für eine Aufwärtsstreckenübertragung und mit ungeänderten Übertragungsrichtungen und Bestimmen der Subrahmen zum Übertragen eines physischen Direktzugriffskanals als die Subrahmen für die Aufwärtsstreckenübertragung in der Zellenübergabeprozedur; und,
bevor der Zellenübergabebefehl zum UE gesendet wird, die Übergabebefehl-Sendeeinheit ferner zu Folgendem konfiguriert ist:
Erzeugen von Konfigurationsinformationen des physischen Direktzugriffskanals, die den Subrahmen zum Übertragen eines physischen Direktzugriffskanals entsprechen, wobei die Informationen, die im Zellenübergabebefehl geführt werden, um das UE anzuweisen, die Subrahmen für die Aufwärtsstreckenübertragung in der Zellenübergabeprozedur zu bestimmen, die Konfigurationsinformationen des physischen Direktzugriffskanals sind.

15. Zugangsnetzeinrichtung nach Anspruch 13, wobei die Aufwärtsstreckenübertragung-Subrahmenbestimmungseinheit ferner zu Folgendem konfiguriert ist:
Bestimmen von Subrahmen für die Aufwärtsstreckenübertragung und mit ungeänderten Übertragungsrichtungen als die Subrahmen für die Aufwärtsstreckenübertragung in der Zellenübergabeprozedur, wobei die Informationen, die im Zellenübergabebefehl geführt werden, um das UE anzuweisen, die Subrahmen für die Aufwärtsstreckenübertragung in der Zellenübergabeprozedur zu bestimmen, Subrahmennummern für die Aufwärtsstreckenübertragung sind; und die Zugangsnetzeinrichtung ferner eine Übergabeeinheit umfasst, die zu Folgendem konfiguriert ist:
Empfangen einer Nachricht, die durch das UE gesendet wird, für eine Übergabe zur Zielzelle in den Subrahmen für die Aufwärtsstreckenübertragung während der Übergabe des UE zur Zielzelle.

16. Zugangsnetzeinrichtung nach Anspruch 13, wobei die Informationen, die im Zellenübergabebefehl geführt werden, um das UE anzuweisen, die Subrahmen für die Aufwärtsstreckenübertragung in der Zellenübergabeprozedur zu bestimmen, eine Zeitduplex-Aufwärtsstrecken-Abwärtsstrecken-Konfiguration in der Zellenübergabeprozedur sind; und
die Zugangsnetzeinrichtung ferner eine Übergabeeinheit umfasst, die zu Folgendem konfiguriert ist:
Empfangen einer Nachricht, die durch das UE gesendet wird, für eine Übergabe zur Zielzelle in den Subrahmen für die Aufwärtsstreckenübertragung, die gemäß der Zeitduplex-Aufwärtsstrecken-Abwärtsstrecken-Konfiguration in der Zellenübergabeprozedur bestimmt werden, während der Übergabe des UE zur Zielzelle.

## Revendications

1. Procédé pour un transfert entre cellules, **caractérisé par le fait qu'**il comprend les opérations consistant à :
faire détecter (200), par un UE, une diffusion d'un dispositif de réseau d'accès une fois qu'il est déterminé qu'une cellule de destination supporte une configuration de liaison montante-liaison descendante en duplex à répartition temporelle dynamique, TDD UL/DL, conformément aux informations de type de cellule de la cellule de destination, portée dans une commande de transfert entre cellules envoyée par le dispositif de réseau d'accès ;
si (210) une diffusion portant une configuration TDD UL/DL changée de la cellule de destination est détectée par l'UE, faire déterminer, par l'UE, des sous-trames pour une transmission en liaison montante dans une procédure de transfert entre cellules conformément à une instruction dans la commande de transfert entre cellules envoyée par un dispositif de réseau d'accès, cas dans lequel les directions de transmission des sous-trames pour une transmission en liaison montante dans la procédure de transfert entre cellules restent constantes dans la procédure de transfert entre cellules ; et
envoyer (220) un message pour un transfert vers une cellule de destination, au dispositif de réseau d'accès dans les sous-trames déterminées durant le transfert vers la cellule de destination.

2. Procédé selon la revendication 1, la détermination, par l'UE, des sous-trames pour une transmission en liaison montante dans la procédure de transfert entre cellules conformément à l'instruction dans la commande de transfert entre cellules envoyée par le dispositif de réseau d'accès, comprenant les opérations consistant à :
faire obtenir, par l'UE, des informations de configuration de canal d'accès aléatoire physique dans la commande de transfert entre cellules ; faire déterminer, par l'UE, des sous-trames pour la transmission d'un canal d'accès aléatoire physique conformément aux informations de configuration de canal d'accès aléatoire physique ; et faire déterminer, par l'UE, les sous-trames pour la transmission d'un canal d'accès aléatoire physique comme étant les sous-trames pour une transmission en liaison montante dans la procédure de transfert entre cellules ;
faire obtenir, par l'UE, des nombres de sous-trames pour la transmission en liaison montante, portés dans la commande de transfert entre cellules, et faire déterminer des sous-trames correspondant aux nombres de sous-trames portés dans la commande de transfert entre cellules comme étant les sous-trames pour une transmission en liaison montante dans la procédure de transfert entre cellules ;
faire obtenir, par l'UE, une configuration de liaison montante-liaison descendante en duplex à répartition temporelle pour la procédure de transfert entre cellules, portée dans la commande de transfert entre cellules, et déterminer les sous-trames pour une transmission en liaison montante dans la procédure de transfert entre cellules conformément à la configuration de liaison montante-liaison descendante en duplex à répartition temporelle portée dans la commande de transfert entre cellules ;
faire déterminer, par l'UE, des sous-trames pour une transmission en liaison montante et avec des directions de transmission inchangées comme étant les sous-trames pour une transmission en liaison montante dans la procédure de transfert entre cellules une fois qu'il est déterminé que la cellule de destination supporte une configuration de liaison montante-liaison descendante en duplex à répartition temporelle dynamique, conformément aux informations de type de cellule de la cellule de destination, portée dans la commande de transfert entre cellules.

3. Procédé selon la revendication 1, lors de la détermination, par l'UE, des sous-trames pour une transmission en liaison montante dans la procédure de transfert entre cellules conformément à l'instruction dans la commande de transfert entre cellules envoyée par le dispositif de réseau d'accès, comprenant les opérations consistant à : faire obtenir, par l'UE, une configuration de liaison montante-liaison descendante en duplex à répartition temporelle pour la procédure de transfert entre cellules, portée dans la commande de transfert entre cellules, et déterminer les sous-trames pour une transmission en liaison montante dans la procédure de transfert entre cellules conformément à la configuration de liaison montante-liaison descendante en duplex à répartition temporelle portée dans la commande de transfert entre cellules, le procédé comprenant en outre les opérations consistant à :
faire déterminer, par l'UE, des sous-trames pour une transmission en liaison descendante dans la procédure de transfert entre cellules conformément à la configuration de liaison montante-liaison descendante en duplex à répartition temporelle portée dans la commande de transfert entre cellules ; et
faire détecter, par l'UE, des informations d'ordonnancement envoyées par le dispositif de réseau d'accès dans les sous-trames pour une transmission en liaison descendante durant le transfert vers la cellule de destination.

4. Procédé selon l'une quelconque des revendications 1 à 2, la commande de transfert entre cellules portant en outre des nombres de sous-trames pour une transmission en liaison descendante dans la procédure de transfert entre cellules, et le procédé comprenant en outre les opérations consistant à :
faire obtenir, par l'UE, des nombres de sous-trames pour une transmission en liaison descendante dans la procédure de transfert entre cellules, portés dans la commande de transfert entre cellules ; et
faire détecter, par l'UE, des informations d'ordonnancement envoyées par le dispositif de réseau d'accès dans des sous-trames correspondant aux nombres de sous-trames pour une transmission en liaison descendante dans la procédure de transfert entre cellules, durant le transfert vers la cellule de destination.

5. Procédé selon la revendication 1, lors de la détermination, par l'UE, des sous-trames pour une transmission en liaison montante dans la procédure de transfert entre cellules conformément à l'instruction dans la commande de transfert entre cellules envoyée par le dispositif de réseau d'accès, comprenant l'opération consistant à : faire déterminer, par l'UE, des sous-trames pour une transmission en liaison montante et avec des directions de transmission inchangées comme étant les sous-trames pour une transmission en liaison montante dans la procédure de transfert entre cellules une fois qu'il est déterminé que la cellule de destination supporte une configuration de liaison montante-liaison descendante en duplex à répartition temporelle dynamique, conformément aux informations de type de cellule de la cellule de destination, portée dans la commande de transfert entre cellules, le procédé comprenant en outre les opérations consistant à :
faire chercher, par l'UE, des informations de pré-configuration pour les sous-trames pour une transmission en liaison montante et avec des directions de transmission inchangées ; ou
faire obtenir, par l'UE, les sous-trames pour une transmission en liaison montante et avec des directions de transmission inchangées via une signalisation de couche plus élevée.

6. Procédé pour un transfert entre cellules, **caractérisé par le fait qu'**il comprend les opérations consistant à :
faire déterminer (400), par un dispositif de réseau d'accès, qu'une cellule de destination supporte une configuration de liaison montante-liaison descendante en duplex à répartition temporelle dynamique ;
faire déterminer (300), par le dispositif de réseau d'accès, des sous-trames pour une transmission en liaison montante dans une procédure de transfert entre cellules d'un UE vers une cellule de destination, cas dans lequel les directions de transmission des sous-trames pour une transmission en liaison montante dans la procédure de transfert entre cellules restent constantes dans la procédure de transfert entre cellules lorsqu'une configuration de liaison montante-liaison descendante en duplex à répartition temporelle, TDD UL/DL, de la cellule de destination a changé ; et
faire envoyer (410), par le dispositif de réseau d'accès, une commande de transfert entre cellules à l'UE, cas dans lequel la commande de transfert entre cellules porte des informations de type de cellule de la cellule de destination afin d'indiquer que la cellule de destination supporte une configuration TDD UL/DL dynamique et des informations pour ordonner à l'UE de déterminer les sous-trames pour une transmission en liaison montante dans la procédure de transfert entre cellules.

7. Procédé selon la revendication 6, la détermination, par le dispositif de réseau d'accès, des sous-trames pour une transmission en liaison montante dans la procédure de transfert entre cellules de l'UE à la cellule de destination comprenant les opérations consistant à :
faire sélectionner, par le dispositif de réseau d'accès, des sous-trames pour transmettre un canal d'accès aléatoire physique à partir de sous-trames pour une transmission en liaison montante et avec des directions de transmission inchangées, et déterminer les sous-trames pour transmettre un canal d'accès aléatoire physique comme étant les sous-trames pour une transmission en liaison montante dans la procédure de transfert entre cellules ; et avant que le dispositif de réseau d'accès n'envoie la commande de transfert entre cellules à l'UE, le procédé comprend en outre l'opération consistant à : faire générer, par le dispositif de réseau d'accès, des informations de configuration de canal d'accès aléatoire physique correspondant aux sous-trames pour transmettre un canal d'accès aléatoire physique, cas dans lequel les informations portées dans la commande de transfert entre cellules pour ordonner à l'UE de déterminer les sous-trames pour une transmission en liaison montante dans la procédure de transfert entre cellules sont les informations de configuration de canal d'accès aléatoire physique.

8. Procédé selon la revendication 6, la détermination, par le dispositif de réseau d'accès, des sous-trames pour une transmission en liaison montante dans la procédure de transfert entre cellules de l'UE à la cellule de destination comprenant l'opération consistant à :
faire déterminer, par le dispositif de réseau d'accès, des sous-trames pour une transmission en liaison montante et avec des directions de transmission inchangées comme étant les sous-trames pour une transmission en liaison montante dans la procédure de transfert entre cellules, cas dans lequel les informations portées dans la commande de transfert entre cellules pour ordonner à l'UE de déterminer les sous-trames pour une transmission en liaison montante dans la procédure de transfert entre cellules sont des nombres de sous-trames pour une transmission en liaison montante ; et
le procédé comprenant en outre l'opération consistant à :
faire recevoir, par le dispositif de réseau d'accès, un message, envoyé par l'UE, pour un transfert vers la cellule de destination dans les sous-trames pour une transmission en liaison montante durant le transfert de l'UE vers la cellule de destination.

9. Procédé selon l'une quelconque des revendications 6 à 8, la commande de transfert entre cellules portant en outre des nombres de sous-trames pour une transmission en liaison descendante dans la procédure de transfert entre cellules, et le procédé comprenant en outre l'opération consistant à :
faire envoyer, par le dispositif de réseau d'accès, des informations d'ordonnancement à l'UE dans des sous-trames correspondant aux nombres de sous-trames pour une transmission en liaison descendante dans la procédure de transfert entre cellules, durant le transfert de l'UE vers la cellule de destination.

10. Procédé selon la revendication 6, les informations portées dans la commande de transfert entre cellules pour ordonner à l'UE de déterminer les sous-trames pour une transmission en liaison montante dans la procédure de transfert entre cellules étant une configuration de liaison montante-liaison descendante en duplex à répartition temporelle dans la procédure de transfert entre cellules ; et
le procédé comprenant en outre l'opération consistant à :
faire recevoir, par le dispositif de réseau d'accès, un message, envoyé par l'UE, pour un transfert vers la cellule de destination dans les sous-trames pour une transmission en liaison montante, déterminé conformément à la configuration de liaison montante-liaison descendante en duplex à répartition temporelle dans la procédure de transfert entre cellules, durant le transfert de l'UE vers la cellule de destination.

11. Procédé selon la revendication 10, le procédé comprenant en outre les opérations consistant à :
faire déterminer, par le dispositif de réseau d'accès, des sous-trames pour une transmission en liaison descendante dans la procédure de transfert entre cellules conformément à la configuration de liaison montante-liaison descendante en duplex à répartition temporelle dans la procédure de transfert entre cellules ; et
faire envoyer, par le dispositif de réseau d'accès, des informations d'ordonnancement à l'UE dans les sous-trames pour une transmission en liaison descendante durant le transfert de l'UE vers la cellule de destination.

12. Procédé selon l'une quelconque des revendications 6 à 8, 10 et 11, le procédé comprenant en outre les opérations consistant à :
après qu'un message d'achèvement de transfert entre cellules envoyé par l'UE est reçu, si une configuration de liaison montante-liaison descendante en duplex à répartition temporelle de la cellule de destination est changée dans la procédure de transfert entre cellules, alors faire envoyer, par le dispositif de réseau d'accès, la configuration de liaison montante-liaison descendante en duplex à répartition temporelle changée de la cellule de destination vers l'UE ; et si la configuration de liaison montante-liaison descendante en duplex à répartition temporelle de la cellule de destination n'est pas changée dans la procédure de transfert entre cellules, alors faire envoyer, par le dispositif de réseau d'accès, la configuration de liaison montante-liaison descendante en duplex à répartition temporelle de la cellule de destination, ou des informations d'indication selon lesquelles la configuration de liaison montante-liaison descendante en duplex à répartition temporelle n'est pas changée vers l'UE ; ou
après qu'un message d'achèvement de transfert entre cellules envoyé par l'UE est reçu, faire envoyer, par le dispositif de réseau d'accès, une configuration de liaison montante-liaison descendante en duplex à répartition temporelle de la cellule de destination vers l'UE.

13. Dispositif de réseau d'accès, **caractérisé par le fait qu'**il comprend :
une unité de détermination de sous-trames de transmission en liaison montante (701) configurée de façon à déterminer des sous-trames pour une transmission en liaison montante dans une procédure de transfert entre cellules d'un UE vers une cellule de destination supportant une configuration de liaison montante-liaison descendante en duplex à répartition temporelle dynamique, TDD UL/DL, cas dans lequel des directions de transmission des sous-trames pour une transmission en liaison montante dans la procédure de transfert entre cellules restent constantes dans la procédure de transfert entre cellules lorsqu'une configuration TDD UL/DL de la cellule de destination a changé ; et
une unité d'envoi de commandes de transfert (702) configurée de façon à envoyer une commande de transfert entre cellules à l'UE, cas dans lequel la commande de transfert entre cellules porte des informations de type de cellule de la cellule de destination afin d'indiquer que la cellule de destination supporte la configuration TDD UL/DL dynamique et des informations pour ordonner à l'UE de déterminer les sous-trames pour une transmission en liaison montante dans la procédure de transfert entre cellules.

14. Dispositif de réseau d'accès selon la revendication 13, l'unité de détermination de sous-trames de transmission en liaison montante étant configurée de façon à :
sélectionner des sous-trames pour transmettre un canal d'accès aléatoire physique à partir de sous-trames pour une transmission en liaison montante et avec des directions de transmission inchangées, et déterminer les sous-trames pour transmettre un canal d'accès aléatoire physique comme étant les sous-trames pour une transmission en liaison montante dans la procédure de transfert entre cellules ; et
avant que la commande de transfert entre cellules ne soit envoyée à l'UE, l'unité d'envoi de commandes de transfert étant configurée en outre de façon à :
générer des informations de configuration de canal d'accès aléatoire physique correspondant aux sous-trames pour transmettre un canal d'accès aléatoire physique, cas dans lequel les informations portées dans la commande de transfert entre cellules pour ordonner à l'UE de déterminer les sous-trames pour une transmission en liaison montante dans la procédure de transfert entre cellules sont les informations de configuration de canal d'accès aléatoire physique.

15. Dispositif de réseau d'accès selon la revendication 13, l'unité de détermination de sous-trames de transmission en liaison montante étant configurée de façon à :
déterminer des sous-trames pour une transmission en liaison montante et avec des directions de transmission inchangées comme étant les sous-trames pour une transmission en liaison montante dans la procédure de transfert entre cellules, cas dans lequel les informations portées dans la commande de transfert entre cellules pour ordonner à l'UE de déterminer les sous-trames pour une transmission en liaison montante dans la procédure de transfert entre cellules sont des nombres de sous-trames pour une transmission en liaison montante ; et
le dispositif de réseau d'accès comprenant en outre une unité de transfert configurée de façon à :
recevoir un message, envoyé par l'UE, pour un transfert vers la cellule de destination dans les sous-trames pour une transmission en liaison montante durant le transfert de l'UE vers la cellule de destination.

16. Dispositif de réseau d'accès selon la revendication 13, les informations portées dans la commande de transfert entre cellules pour ordonner à l'UE de déterminer les sous-trames pour une transmission en liaison montante dans la procédure de transfert entre cellules étant une configuration de liaison montante-liaison descendante en duplex à répartition temporelle dans la procédure de transfert entre cellules ; et
le dispositif de réseau d'accès comprenant en outre une unité de transfert configurée de façon à :
recevoir un message, envoyé par l'UE, pour un transfert vers la cellule de destination dans les sous-trames pour une transmission en liaison montante, déterminé conformément à la configuration de liaison montante-liaison descendante en duplex à répartition temporelle dans la procédure de transfert entre cellules, durant le transfert de l'UE vers la cellule de destination.
